# EUROPÄISCHE PATENTANMELDUNG

(11) **EP 3 878 574 A1**
(43) Veröffentlichungstag der Anmeldung: **15.09.2021**
(21) Anmeldenummer: 20162928.4
(22) Anmeldetag: 13.03.2020
(51) Int. Cl.: B22D 11/16, F16C 19/52, G01H 1/00

(54) **ZUSTANDSERMITTLUNG FÜR STRANGFÜHRUNGSROLLEN DURCH SCHWINGUNGSAUSWERTUNG**

(71) Anmelder: Primetals Technologies Austria GmbH, 4031 Linz (AT)
(72) Erfinder: Kolmbauer, Franz, 1127 Rio de Janeiro (BR); Mayrhofer, Anna, 4722 Peuerbach (AT); Karnitsch-Einberger, Eberhard, 4020 Linz (AT); Hartl, Franz, 4720 Kallham (AT); Rohrhofer, Andreas, 4070 Eferding (AT)
(74) Vertreter: Metals@Linz

(57) **Zusammenfassung**

Ein Strangführungsabschnitt (8) einer Stranggießanlage (1) ist einer Stranggießkokille (2) der Stranggießanlage (1) nachgeordnet. Der Strangführungsabschnitt (8) weist mindestens eine Strangführungsrolle (6) zum Stützen eines mit der Stranggießkokille (2) gegossenen Metallstrangs (5) auf. Die Strangführungsrolle (6) ist in dem Strangführungsabschnitt in Rollenlagern (10) gelagert. Der Strangführungsabschnitt (8) weist mindestens eine Sensoreinrichtung (14) auf, die ihrerseits mindestens einen an die Strangführungsrolle (6) oder deren Rollenlager (10) akustisch angekoppelten Schwingungssensor (15) aufweist, mittels dessen die beim Drehen der Strangführungsrolle (6) in den Rollenlagern (10) auftretenden Schwingungen erfasst werden. Die Sensoreinrichtung (14) weist eine Schnittstelle (16) auf, über welche die Sensoreinrichtung (14) die aus den erfassten Schwingungen abgeleiteten Schwingungsdaten (SD) an eine Auswertungseinrichtung (17) übermittelt. Die Auswertungseinrichtung (17) ermittelt unter Auswertung der Schwingungsdaten (SD) den Zustand (Z) des mindestens einen Rollenlagers (10).

## Beschreibung

### Gebiet der Technik

Die vorliegende Erfindung geht aus von einem Strangführungsabschnitt einer Stranggießanlage,
- wobei der Strangführungsabschnitt einer Stranggießkokille der Stranggießanlage nachgeordnet ist,
- wobei der Strangführungsabschnitt mindestens eine Strangführungsrolle zum Stützen eines mit der Stranggießkokille gegossenen Metallstrangs aufweist,
- wobei die Strangführungsrolle in dem Strangführungsabschnitt in Rollenlagern gelagert ist.

Die vorliegende Erfindung geht weiterhin aus von einem Ermittlungssystem für den Zustand mindestens eines Rollenlagers einer Strangführungsrolle eines einer Stranggießkokille einer Stranggießanlage nachgeordneten Strangführungsabschnitts der Stranggießanlage.

### Stand der Technik

In Stranggießanlagen wird flüssiges Metall - oftmals Stahl - aus einer Gießpfanne über einen Zwischenverteiler (englisch: tundish) in eine Durchlaufkokille gegossen. Die Stranggießkokille wird intensiv mit Wasser gekühlt. Das flüssige Metall erstarrt dadurch an den Seitenwänden der Stranggießkokille und bildet eine Strangschale. Der Kern ist noch flüssig. Der so gebildete teilerstarrte Metallstrang wird aus der Stranggießkokille abgezogen und weiter intensiv gekühlt, so dass er nach und nach vollständig erstarrt. Nach dem vollständigen Erstarren kann der Metallstrang beispielsweise mittels einer Brennschneidmaschine abgetrennt werden oder - im Falle eines Endlosbetriebs einer Gießwalzanlage - direkt gewalzt werden.

Der Metallstrang wird nach dem Ausziehen aus der Stranggießkokille durch eine Vielzahl von Strangführungsrollen gestützt und geführt. Die Strangführungsrollen selbst sind in Rollenlagern gelagert.

Die Strangführungsrollen sind zumindest von außen durch die Strangkühlung als solche mit gekühlt. Oftmals sind die Strangführungsrollen auch innen durch Kühlwasser gekühlt. In diesem Fall weisen die Strangführungsrollen Drehdurchführungen auf, über welche das Kühlwasser der jeweiligen Strangführungsrolle zugeführt und aus der jeweiligen Strangführungsrolle abgeführt wird.

Die thermischen und mechanischen Belastungen, denen die Strangführungsrollen und damit auch die Rollenlager ausgesetzt sind, sind sehr hoch. Bereits aus diesem Grund verschleißen die Rollenlager relativ schnell. Weiterhin kann eine unzureichende Kühlung und/oder Schmierung der Rollenlager zu einem erhöhten Verschleiß der Rollenlager führen. Für einen einwandfreien Betrieb der Stranggießanlage muss jedoch sichergestellt sein, dass sich die Rollenlager aller Strangführungsrollen in einem funktionsfähigen Zustand befinden. Kommt es zu Beschädigungen auch an nur einem Rollenlager, hat dies negative Auswirkungen auf den Stranggießprozess.

Beispielsweise kann eine mitlaufende Strangführungsrolle - also eine Strangführungsrolle, die nicht angetrieben ist - blockieren, so dass sie nicht mit ihrer Mantelfläche auf dem Metallstrang abrollt, sondern der Metallstrang über die sich nicht mehr drehende Strangführungsrolle gezogen wird. Dadurch kommt es zumindest zu erhöhten Reibungskräften, welche ihrerseits wiederum eine erhöhte Stromaufnahme von angetriebenen Strangführungsrollen erfordern. Die Folge sind zumindest höhere Energiekosten, oftmals auch höherer Verschleiß der Rollenlager der angetriebenen Strangführungsrollen. Blockieren mehrere mitlaufende Strangführungsrollen, kann sogar der Fall auftreten, dass es zu einem Schlupf zwischen den angetriebenen Strangführungsrollen und dem Metallstrang kommt. Dies kann zu Fehlern in der Wegverfolgung des Metallstranges führen. Solange dieser Fehler nicht bemerkt wird, stimmt auch die tatsächliche Abzugsgeschwindigkeit des Metallstranges nicht mehr mit einer korrespondierenden Sollgeschwindigkeit überein. Fehlerhafte Berechnungen in allen Prozessmodellen, welche die Abzugsgeschwindigkeit des Metallstranges verwerten, arbeiten daher fehlerhaft. Beispiele derartiger Prozessmodelle sind die Strangkühlung und die Ermittlung der Temperatur des Metallstranges beim Verlassen der Stranggießanlage. Im Ergebnis ergibt sich ein Metallstrang minderer Qualität, im Extremfall sogar Schrott.

Kommt es zu unterschiedlichen Geschwindigkeiten zwischen dem Metallstrang und den Strangführungsrollen, führt dies weiterhin zum einen zu einem erhöhten Verschleiß der Mantelflächen der Strangführungsrollen und zum anderen zu Oberflächendefekten des Metallstranges. Es sind also wieder ein höherer Verschleiß der Strangführungsrollen und eine geringere Qualität des Metallstranges die Folge. Die Oberflächendefekte des Metallstranges müssen beispielsweise durch manuelle Nachbearbeitung beseitigt werden. Im Extremfall kann der Metallstrang nicht verwendet werden und muss wieder eingeschmolzen werden.

Kommt es zu unterschiedlichen Geschwindigkeiten zwischen dem Metallstrang und den Strangführungsrollen, können auch noch gravierendere Folgen eintreten. Beispielsweise ist es möglich, dass es aufgrund der erhöhten mechanischen Kräfte zu einem Bruch eines Rollenlagers einer Strangführungsrolle kommt, so dass die entsprechende Strangführungsrolle durch die fehlende Unterstützung des gebrochenen Rollenlagers absackt. Dadurch fehlt in diesem Bereich der Strangführung die Stützung des Metallstrangs. Im Extremfall kann dies zu einem Gießabbruch führen. Noch schlimmer ist es, wenn die beim Blockieren einer Strangführungsrolle auf den Metallstrang ausgeübten Kräfte so hoch sind, dass die Strangschale aufreißt.

Dann tritt der noch flüssige Kern aus und hohe Anlagenschäden sind die Folge. Es kann auch zu Personenschäden kommen.

Ein weiteres Problem einer blockierenden Strangführungsrolle besteht darin, dass in diesem Fall ein bestimmter Bereich der Strangführungsrolle permanent in direktem Kontakt mit dem heißen Metallstrang steht. Dadurch kommt es in diesem Bereich der Strangführungsrolle zu einer lokalen Überhitzung der Strangführungsrolle. Ein erhöhter Verschleiß und letztendlich ein Ausfall der Strangführungsrolle selbst sind die Folge.

Ein frühzeitiges und rechtzeitiges Erkennen von Verschleiß der Rollenlager kann all diese Probleme vermeiden oder zumindest minimieren. Schäden an einem Rollenlager können theoretisch durch eine Inspektion erkannt werden. Eine Inspektion ist in der Praxis jedoch nicht durchführbar, da sogar in Produktionspausen der Stranggießanlage die Rollenlager nicht zugänglich sind.

Schäden an einem Rollenlager können weiterhin während einer Rotation der Strangführungsrolle an deren Verhalten erkannt werden. Im Stand der Technik sind jedoch keine Vorgehensweisen hierfür bekannt.

### Zusammenfassung der Erfindung

Die Aufgabe der vorliegenden Erfindung besteht darin, Möglichkeiten zu schaffen, mittels derer Schäden an einem Rollenlager einer Strangführungsrolle während des Betriebs der Stranggießanlage und damit während der Rotation der Strangführungsrolle zuverlässig erkannt werden können.

Die Aufgabe wird zum einen durch einen Strangführungsabschnitt einer Stranggießanlage mit den Merkmalen des Anspruchs 1 gelöst. Vorteilhafte Ausgestaltungen des Strangführungsabschnitts sind Gegenstand der abhängigen Ansprüche 2 bis 6.

Erfindungsgemäß wird ein Strangführungsabschnitt einer Stranggießanlage der eingangs genannten Art dadurch ausgestaltet,
- dass der Strangführungsabschnitt mindestens eine Sensoreinrichtung aufweist, die ihrerseits mindestens einen an die Strangführungsrolle oder deren Rollenlager akustisch angekoppelten Schwingungssensor aufweist, mittels dessen die beim Drehen der Strangführungsrolle in den Rollenlagern auftretenden Schwingungen erfassbar sind, und
- dass die Sensoreinrichtung eine Schnittstelle aufweist, über die aus den erfassten Schwingungen abgeleitete Schwingungsdaten an eine Auswertungseinrichtung übermittelbar sind.

Die Strangführungsabschnitte sind oftmals als Rollensegmente ausgebildet. In diesem Fall weist der Strangführungsabschnitt mindestens zwei Gruppen von Strangführungsrollen auf, die ihrerseits jeweils mehrere Strangführungsrollen aufweisen. Die Strangführungsrollen der jeweiligen Gruppe liegen an derselben Seite des gegossenen Metallstrangs an. Die Gruppen liegen sich weiterhin paarweise gegenüber, so dass der gegossene Metallstrang zwischen den beiden sich gegenüberliegenden Gruppen durchläuft. Die einzelnen Rollensegmente können bis zu 20 Rollenpaare aufweisen. Stranggießanlagen können 10 und mehr derartiger Rollensegmente aufweisen.

Das Format des gegossenen Metallstrangs kann nach Bedarf sein. Es kann sich um ein Brammenformat, ein Knüppelformat und ein anderes Format handeln. Das Metall, aus dem der Metallstrang besteht, ist oftmals Stahl. Es kann sich auch um ein anderes Metall handeln, beispielsweise Aluminium.

Die Strangführungsrolle kann nach Bedarf angetrieben oder nicht angetrieben sein im letztgenannten Fall ist die Strangführungsrolle mitlaufend. Wenn der Strangführungsabschnitt mehrere Strangführungsrollen aufweist, ist in der Regel mindestens eine der Strangführungsrollen des Strangführungsabschnitts angetrieben und mindestens eine andere der Strangführungsrollen des Strangführungsabschnitts nicht angetrieben. Dies ist aber nicht zwingend.

Die Rollenlager - also die Lager, in denen die Strangführungsrolle gelagert ist - sind in der Regel Wälzlager, beispielsweise Kugellager oder Walzenlager. Theoretisch ist aber auch eine Ausgestaltung als Gleitlager denkbar. Die Anzahl an Rollenlagern pro Strangführungsrolle beträgt mindestens zwei. In der Regel ist die Anzahl drei, in manchen Fällen ist sie aber auch größer als drei, beispielsweise vier.

Der Schwingungssensor kann ein Schallsensor sein, insbesondere ein Ultraschallsensor. Es ist möglich, dass der Schwingungssensor akustische Schwingungen erfasst, die im hörbaren Bereich (ca. 20 Hz bis ca. 20 kHz) erfassen. Es kann aber auch eine Erfassung akustischer Schwingungen möglich, die nicht im hörbaren Bereich liegen, sondern beispielsweise im Ultraschallbereich oberhalb von 20 kHz liegen. Der Begriff "akustisch" charakterisiert also die Art des erfassten Schwingungssignals, nicht aber dessen Frequenz.

Die Sensoreinrichtung übermittelt die Schwingungsdaten vorzugsweise digitalisiert an die Auswertungseinrichtung. Soweit erforderlich, kann die Sensoreinrichtung weiterhin vor der Digitalisierung eine Verstärkung der noch analogen Sensorsignale vornehmen. Weiterhin kann die Sensoreinrichtung vor oder nach der Digitalisierung eine Filterung vornehmen, beispielsweise eine Hochpassfilterung, eine Tiefpassfilterung, eine Pegelbegrenzung und andere mehr. Im Informationsgehalt stimmen die Schwingungsdaten jedoch mit den erfassten Sensorsignalen überein.

Die Sensoreinrichtung ist in aller Regel eine einzige Baueinheit. Sie weist also ein Gehäuse auf, in dem alle Komponenten der Sensoreinrichtung - also der Schwingungssensor selbst, die Schnittstelle, gegebenenfalls eine Filtereinheit und andere mehr - angeordnet sind. Hingegen weist die Sensoreinrichtung in aller Regel keine Komponenten auf, die relativ zueinander beweglich angeordnet sind.

In vielen Fällen wird die Strangführungsrolle mittels der Strangführungsrolle zugeführten Kühlwassers innen gekühlt. In diesem Fall ist der Schwingungssensor vorzugsweise über das Kühlwasser an die Strangführungsrolle und/oder an die Rollenlager akustisch angekoppelt. Dadurch kann eine sehr zuverlässige Erfassung der beim Drehen der Strangführungsrolle in den Rollenlagern auftretenden Schwingungen erfolgen. Im Falle der direkten Ankopplung an das Kühlwasser - also in dem Fall, dass der Schwingungssensor eine sich im Kühlwasser ausbreitende Schwingung direkt durch Kontakt mit dem Kühlwasser erfasst - kann der Schwingungssensor insbesondere als Hydrophon ausgebildet sein.

Die Kühlung der Strangführungsrolle erfolgt in der Regel zusätzlich auch von außen durch die Strangkühlung. Dies ist im Rahmen der vorliegenden Erfindung aber von untergeordneter Bedeutung.

Sofern die Strangführungsrolle mit Kühlwasser von innen gekühlt wird, weist die Strangführungsrolle zum Zuführen und/oder Abführen des Kühlwassers in aller Regel an mindestens einem Ende eine Drehdurchführung auf. Über die Drehdurchführung sind in diesem Fall Versorgungsleitungen zum Zuführen und/oder Abführen des Kühlwassers mit der Strangführungsrolle verbunden. Vorzugsweise ist der Schwingungssensor in diesem Fall an der Drehdurchführung angeordnet. Dadurch kann der Schwingungssensor an einer vergleichsweise gut zugänglichen Stelle angeordnet werden. Im Falle der Ausgestaltung der Sensoreinrichtung als Baueinheit ist selbstverständlich nicht nur der Schwingungssensor selbst, sondern die gesamte Sensoreinrichtung an der Drehdurchführung angeordnet.

In der Regel ist an beiden Enden der Strangführungsrolle jeweils eine Drehdurchführung angeordnet, wobei über die eine Drehdurchführung das Kühlwasser der Strangführungsrolle zugeführt wird und über die andere Drehdurchführung das Kühlwasser aus der Strangführungsrolle abgeführt wird. In diesem Fall kann der Schwingungssensor nach Bedarf an der einen oder an der anderen Drehdurchführung angeordnet sein. Es ist auch möglich, dass zwei Schwingungssensoren vorhanden sind, wobei einer der beiden Schwingungssensoren an der einen Drehdurchführung angeordnet ist und der andere Schwingungssensor an der anderen Drehdurchführung angeordnet ist. Im Falle der Ausgestaltung der Sensoreinrichtungen als Baueinheiten ist selbstverständlich nicht nur der jeweilige Schwingungssensor selbst, sondern die gesamte jeweilige Sensoreinrichtung an der jeweiligen Drehdurchführung angeordnet.

Vorzugsweise ist die Schnittstelle zur Auswertungseinrichtung als leitungslose Schnittstelle ausgebildet, insbesondere als Funkschnittstelle, und weist weiterhin die Sensoreinrichtung eine eigene, interne Energiequelle auf. Die Energieversorgung der Sensoreinrichtung erfolgt also autark. Die Energiequelle kann beispielsweise als Batterie, als Akkumulator oder als Einrichtung mit einem sogenannten Energy harvesting ausgebildet sein. Auch Kombinationen dieser Maßnahmen sind möglich. Aufgrund der Ausbildung der Schnittstelle zur Auswertungseinrichtung als leitungslose Schnittstelle und der eigenen, internen Energiequelle der Sensoreinrichtung müssen keinerlei Leitungen zur Sensoreinrichtung gelegt werden. Vielmehr muss lediglich die Sensoreinrichtung so wie sie ist verbaut werden.

Vorzugsweise ist vorgesehen,
- dass die Sensoreinrichtung derart ausgebildet ist, dass sie aufgrund eines intern überwachten Zeitablaufs oder aufgrund eines über die Schnittstelle erhaltenen Aktivierungsbefehls von einem passiven Zustand in einen aktivierten Zustand übergeht und aufgrund eines intern überwachten Zeitablaufs oder aufgrund eines über die Schnittstelle erhaltenen Passivierungsbefehls vom aktivierten Zustand in den passiven Zustand übergeht, und
- dass ausschließlich im aktivierten Zustand der Sensoreinrichtung der Schwingungssensor die beim Drehen der Strangführungsrolle auftretenden Schwingungen erfasst.

Dadurch wird zum einen die anfallende Datenmenge begrenzt und wird zum anderen der Energieverbrauch der Sensoreinrichtung minimiert. Letzteres ist insbesondere dann von Bedeutung, wenn die Sensoreinrichtung über eine interne, autarke Energiequelle verfügt, also nicht über Leitungen mit Energie versorgt wird. Denn dadurch wird die Lebenszeit der Sensoreinrichtung, die bis zu einer erforderlichen Erneuerung der Batterie oder einer erforderlichen Neuladung des Akkumulators benötigt wird, deutlich verlängert.

Insbesondere im Falle eines Übergangs in den passiven Zustand aufgrund eines Zeitablaufs kann die Zeitdauer der jeweiligen Aktivierung durch die Sensoreinrichtung selbst festgelegt sein. Dies gilt unabhängig davon, ob die Aktivierung aufgrund eines intern überwachten Zeitablaufs oder aufgrund eines Aktivierungsbefehls erfolgt. Denn im letztgenannten Fall kann der Erhalt des Aktivierungsbefehls einen internen Zeitgeber der Sensoreinrichtung starten, wobei der Ablauf des Zeitgebers den Übergang in den passiven Zustand auslöst. Die Zeitdauer der jeweiligen Aktivierung liegt vorzugsweise oberhalb von 1 Minute und in der Regel unter 10 Minuten. Insbesondere kann sie zwischen 2 und 6 Minuten liegen, beispielsweise bei 3 oder 4 Minuten. Derartige Zeiträume entsprechen bei einer typischen Strangabzugsgeschwindigkeit und einem typischen Durchmesser der Strangführungsrolle mehreren Umdrehungen der Strangführungsrolle. Der zeitliche Abstand zwischen aufeinanderfolgenden Aktivierungen der Sensoreinrichtung ist hingegen in aller Regel deutlich größer. Er kann beispielsweise bei 1 Stunde oder bei noch größeren Werten liegen, beispielsweise 10 Stunden, 12 Stunden oder einem Tag. Die genannten Zeiträume sind selbstverständlich nur beispielhaft.

Wenn sowohl das Überführen in den aktivierten Zustand als auch das Überführen in den passiven Zustand aufgrund eines über die Schnittstelle erhaltenen jeweiligen Befehls erfolgen, werden die Zeiten, zu denen die Sensoreinrichtung aktiviert ist, von außen festgelegt. In diesem Fall sollte die Auswertungseinrichtung (oder eine andere Einheit, welche die Befehle übermittelt) entsprechende Zeiten einhalten.

Vorzugsweise erfasst der Schwingungssensor die beim Drehen der Strangführungsrolle auftretenden Schwingungen mit einer Abtastrate, die mindestens im zweistelligen kHz-Bereich liegt. Dadurch kann eine zuverlässige Erfassung aller relevanten Frequenzen erfolgen. Die Abtastung kann beispielsweise mit 20 kHz, 50 kHz oder mehr erfolgen, insbesondere mit 100 kHz oder mehr. Eine Erfassung mit 100 kHz ist andererseits in der Regel völlig ausreichend. Höhere Abtastraten können daher zwar möglich sein, sind in der Regel nicht erforderlich.

Die Aufgabe wird weiterhin durch ein Ermittlungssystem mit den Merkmalen des Anspruchs 7 gelöst. Vorteilhafte Ausgestaltungen des Ermittlungssystems sind Gegenstand der abhängigen Ansprüche 8 bis 17.

Erfindungsgemäß wird ein Ermittlungssystem der eingangs genannten Art dadurch ausgestaltet,
- dass das Ermittlungssystem mindestens eine Sensoreinrichtung aufweist, die ihrerseits mindestens einen an die Strangführungsrolle oder deren Rollenlager akustisch angekoppelten Schwingungssensor aufweist, mittels dessen die beim Drehen der Strangführungsrolle in den Rollenlagern auftretenden Schwingungen erfasst werden,
- dass die Sensoreinrichtung eine Schnittstelle aufweist, über welche die Sensoreinrichtung aus den erfassten Schwingungen abgeleitete Schwingungsdaten an eine Auswertungseinrichtung des Ermittlungssystems übermittelt, und
- dass die Auswertungseinrichtung unter Auswertung der an sie übermittelten Schwingungsdaten den Zustand des mindestens einen Rollenlagers ermittelt.

Vorzugsweise übermittelt die Auswertungseinrichtung zumindest immer dann eine Meldung an eine Bedienperson und/oder ein Monitoringsystem, wenn sie im Rahmen der Auswertung einen kritischen Zustand des Rollenlagers ermittelt. Dadurch können im Falle eines kritischen Zustands möglichst schnell Maßnahmen zur Behebung des kritischen Zustands eingeleitet werden. Die Ausgabe an den Bediener kann über ein dezidiertes HMI (= human machine interface = Mensch-Maschine-Schnittstelle) oder über ein anderes Bediengerät erfolgen, beispielsweise ein Smartphone oder ein Tablet. Das Monitoringsystem kann beispielsweise ein CMS (= condition monitoring system) oder ein MMS (= maintenance management System) sein, insbesondere ein cCMS oder ein cMMs (das "c" steht für "computerized").

Vorzugsweise speichert die Auswertungseinrichtung die Schwingungsdaten und/oder den von ihr ermittelten Zustand des mindestens einen Rollenlagers nach Art einer Historie. Dadurch stehen die gespeicherten Informationen für spätere Auswertungen jederzeit zur Verfügung.

Bei einer Speicherung nach Art einer Historie treten neu gespeicherte Informationen - im vorliegenden Fall also die zu speichernden Schwingungsdaten und/oder Zustände - zu den bereits gespeicherten Informationen hinzu. Die bereits gespeicherten Informationen werden aber nicht verdrängt, sondern bleiben erhalten. Weiterhin ist den Daten in der Regel ein relevanter Zeitpunkt zugeordnet. Dieser Zeitpunkt kann im vorliegenden Fall insbesondere den Erfassungszeitraum charakterisieren, während dessen die den Schwingungsdaten zu Grunde liegenden Schwingungen erfasst wurden. Die Speicherung kann nach Bedarf lokal oder dezentral erfolgen, gegebenenfalls auch in einer Cloud.

Vorzugsweise berücksichtigt die Auswertungseinrichtung bei der Ermittlung des Zustands des mindestens einen Rollenlagers zusätzlich zu den Schwingungsdaten Betriebsdaten der Strangführungsrolle, des Strangführungsabschnitts und/oder der Stranggießanlage. Dadurch kann die Auswertung optimiert werden. Die berücksichtigten Betriebsdaten können nach Bedarf Soll- oder Istwerte sein. Beispiele geeigneter Betriebsdaten sind die Drehzahl oder die Umfangsgeschwindigkeit der Strangführungsrolle, wobei letztere zugleich auch mit der Abzugsgeschwindigkeit übereinstimmt, mit welcher der Metallstrang aus der Stranggießkokille abgezogen wird. Weitere mögliche Betriebsdaten der Strangführungsrolle sind der Druck und die Temperatur des Kühlwassers und der Schmierungszustand der Rollenlager. Mögliche Betriebsdaten des Strangführungsabschnitts können beispielsweise im Falle der Ausbildung als Rollensegment der Anpressdruck sein, den das Rollensegment auf den Strang ausübt. Mögliche Betriebsdaten der Stranggießanlage als Ganzes sind beispielsweise die Abzugsgeschwindigkeit des Metallstrangs aus der Stranggießkokille oder das Gießformat.

Vorzugsweise ermittelt die Auswertungseinrichtung eine zweidimensionale Frequenzzerlegung der an sie übermittelten Schwingungsdaten, wobei je eine der beiden Dimensionen der Frequenzzerlegung die Zeit und die Frequenz sind. In diesem Fall kann die Auswertungseinrichtung zur Ermittlung des Zustands des mindestens einen Rollenlagers die Frequenzzerlegung auswerten. Diese Art der Auswertung führt zu besonders zuverlässigen Ergebnissen.

Derartige Frequenzzerlegungen sind Fachleuten allgemein bekannt. Es handelt sich um die (meist komplexe) Frequenzanalyse eines Signals, hier der erfassten Schwingungen bzw. der daraus abgeleiteten Schwingungsdaten. Sie können beispielsweise mittels einer Kurzzeit-Fouriertransformation ermittelt werden. Darstellungen derartiger Frequenzzerlegungen sind Fachleuten unter dem Begriff "Spektogramm" bekannt.

Eine mögliche Art der Verwertung der Frequenzzerlegung besteht darin, dass die Auswertungseinrichtung für Zeitpunkte der übermittelten Schwingungsdaten jeweils die höchste Amplitude ermittelt, die jeweiligen höchsten Amplituden mit mindestens einer Schranke vergleicht und den Zustand des mindestens einen Rollenlagers in Abhängigkeit von den Vergleichen bestimmt.

Falls beispielsweise eine untere und eine obere Schranke vorgegeben sind, kann, bezogen auf einen einzelnen Zeitpunkt beispielsweise gelten: Liegt die maximale Amplitude unter einer unteren Schranke, läuft die Strangführungsrolle zu diesem Zeitpunkt leise. Das einzelne Ergebnis wird als gut bewertet. Liegt die maximale Amplitude über der unteren Schranke, aber unter einer oberen Schranke, läuft die Strangführungsrolle zu diesem Zeitpunkt mittellaut. Das einzelne Ergebnis wird als mittelmäßig bewertet. Liegt die maximale Amplitude über der oberen Schranke, läuft die Strangführungsrolle zu diesem Zeitpunkt laut. Das einzelne Ergebnis wird als schlecht bewertet. Die Bestimmung des Zustands des mindestens einen Rollenlagers in Abhängigkeit von den Vergleichen erfolgt sodann anhand der Gesamtheit der Einzelbewertungen. Beispielsweise kann die Auswertungseinrichtung den Zustand in Abhängigkeit von der Häufigkeit der Einstufung als leise bzw. gut, mittellaut bzw. mittelmäßig oder laut bzw. schlecht bestimmen. Besondere Bedeutung kommt in diesem Zusammenhang insbesondere den "schlechten" Einzelbewertungen zu.

Es ist möglich, dass die mindestens eine Schranke zeitlich konstant ist. Alternativ kann sie zeitvariabel sein, insbesondere von der Auswertungseinrichtung in Abhängigkeit vom Betriebszustand der Stranggießanlage bestimmt werden. Dadurch kann unter Umständen die Ermittlung des Zustands optimiert werden. Beispielsweise können für die Betriebszustände "Angießen", "gleichbleibender, stabiler Betriebszustand", "Gießende", "Breitenveränderung der Kokille" und andere mehr verschiedene Schranken verwendet werden. Auch ist es möglich, die mindestens eine Schranke in Abhängigkeit von der Betriebstemperatur und/oder der Abzugsgeschwindigkeit des Metallstrangs (oder einer hierzu gleichwertigen Größe) zu bestimmen.

Eine weitere mögliche Art der Verwertung der Frequenzzerlegung besteht darin, dass die Auswertungseinrichtung für eine Vielzahl von Zeitpunkten und in einer Anzahl von vorbestimmten Frequenzbändern der Frequenzzerlegung jeweils den Energieinhalt der Frequenzzerlegung ermittelt und dass die Auswertungseinrichtung den Zustand des mindestens einen Rollenlagers anhand der ermittelten Energieinhalte bestimmt. Die Auswertungseinrichtung kann den Energieinhalt beispielsweise dadurch ermitteln, dass sie die Frequenzzerlegung für den jeweiligen Zeitpunkt über die Frequenz integriert. Die Integrationsgrenzen sind die untere und die obere Grenze des jeweiligen Frequenzbandes.

Eine weitere mögliche Art der Verwertung der Frequenzzerlegung besteht darin, dass die Auswertungseinrichtung - mit oder ohne vorherige Filterung der Energieinhalte innerhalb des jeweiligen Frequenzbandes - für das jeweilige Frequenzband einen Mittelwert der Energieinhalte und einen Maximalwert der Energieinhalte ermittelt und den Zustand des mindestens einen Rollenlagers anhand der ermittelten Mittelwerte und der ermittelten Maximalwerte der Frequenzbänder bestimmt.

Beispielsweise kann die Auswertungseinrichtung innerhalb eines jeweiligen Frequenzbandes die Differenz zwischen Maximalwert und Mittelwert bilden. Liegt diese Differenz oberhalb einer vorbestimmten Schranke, liefert dies eine negative Einzelbewertung. Minimal kann es ausreichen, die Auswertung für ein einziges Frequenzband durchzuführen. In der Regel wird sie aber für mehrere Frequenzbänder durchgeführt. In diesem Fall kann die Auswertungseinrichtung den Zustand des Rollenlagers anhand der Anzahl an negativen Einzelbewertungen bestimmen. Liegt die Anzahl negativer Einzelbewertungen oberhalb einer oberen Schranke, wird der Zustand des Rollenlagers als schlecht beurteilt und ein Alarm ausgelöst. Liegt die Anzahl negativer Einzelbewertungen unterhalb einer unteren Schranke, wird der Zustand des Rollenlagers als gut beurteilt und kein Alarm ausgelöst. Liegt die Anzahl negativer Einzelbewertungen zwischen den beiden Schranken, wird ein Warnhinweis ausgegeben.

Eine weitere mögliche Art der Verwertung der Frequenzzerlegung besteht darin, dass die Auswertungseinrichtung für mehrere Frequenzbänder jeweils - mit oder ohne vorherige Filterung der Energieinhalte innerhalb des jeweiligen Frequenzbandes -
a) einen Mittelwert der Energieinhalte und einen Maximalwert der Energieinhalte ermittelt,
b) einen Anfangszeitpunkt ermittelt, zu dem der Energieinhalt erstmals einen Zwischenwert zwischen dem Mittelwert und dem Maximalwert überschreitet,
c) ausgehend von dem ermittelten Anfangszeitpunkt einen Endzeitpunkt ermittelt, zu dem der Energieinhalt den Mittelwert erstmals wieder unterschreitet,
d) zwischen dem ermittelten Anfangszeitpunkt und dem ermittelten Endzeitpunkt einen resultierenden Zeitpunkt ermittelt, zu dem der Energieinhalt maximal ist,
e) ausgehend von dem zuletzt ermittelten Endzeitpunkt die Schritte b) bis d) wiederholt, bis innerhalb des jeweiligen Frequenzbandes alle resultierenden Zeitpunkte ermittelt sind,
f) sodann anhand der ermittelten resultierenden Zeitpunkte eine jeweilige Periode ermittelt, mit welcher der Energieinhalt innerhalb des jeweiligen Frequenzbandes variiert, und
g) anhand der für die Frequenzbänder ermittelten Perioden den Zustand des mindestens einen Rollenlagers bestimmt.

Der Zwischenwert kann in etwa (oder exakt) bei der Mitte zwischen dem Mittelwert und dem Maximalwert liegen. Gleiche Perioden in mehreren Frequenzbändern sind ein Indiz für eine Schädigung des Rollenlagers.

Eine weitere mögliche Art der Verwertung der Frequenzzerlegung besteht darin, dass die Auswertungseinrichtung innerhalb der Frequenzbänder eine Frequenzanalyse der ermittelten Energieinhalte mit einer Drehzahl der Strangführungsrolle vergleicht und den Zustand des mindestens einen Rollenlagers anhand des Vergleichs bestimmt. Die Frequenzanalyse kann beispielsweise durch eine Fouriertransformation ermittelt werden. Es können diejenigen Frequenzen der Frequenzanalyse ermittelt werden, mit denen die Energieinhalte variieren. Je stärker die Frequenzanalyse Anteile ergibt, die mit der Drehzahl der Strangführungsrolle (Grundschwingung) oder ganzzahligen Vielfachen davon (Oberschwingungen) periodisch sind, desto größer oder wahrscheinlicher ist eine Schädigung des Rollenlagers.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Stranggießanlage,
- FIG 2: einen Strangführungsabschnitt,
- FIG 3: eine Strangführungsrolle, deren Lagerung und Versorgungsleitungen,
- FIG 4: einen Ausschnitt von FIG 3 in vergrößerter Darstellung,
- FIG 5: ein Blockschaltbild mit einer Sensoreinrichtung und einer Auswertungseinrichtung,
- FIG 6: ein Zeitdiagramm,
- FIG 7: ein Zeitdiagramm,
- FIG 8: ein Frequenz-Zeit-Anteilsdiagramm,
- FIG 9: ein Ablaufdiagramm,
- FIG 10: ein Ablaufdiagramm,
- FIG 11: ein Ablaufdiagramm,
- FIG 12: ein Ablaufdiagramm,
- FIG 13: einen zeitlichen Verlauf eines Energieinhalts,
- FIG 14: ein Ablaufdiagramm,
- FIG 15: ein Ablaufdiagramm,
- FIG 16: ein Ablaufdiagramm,
- FIG 17: eine Fouriertransformierte und
- FIG 18: eine weitere Fouriertransformierte.

### Beschreibung der Ausführungsformen

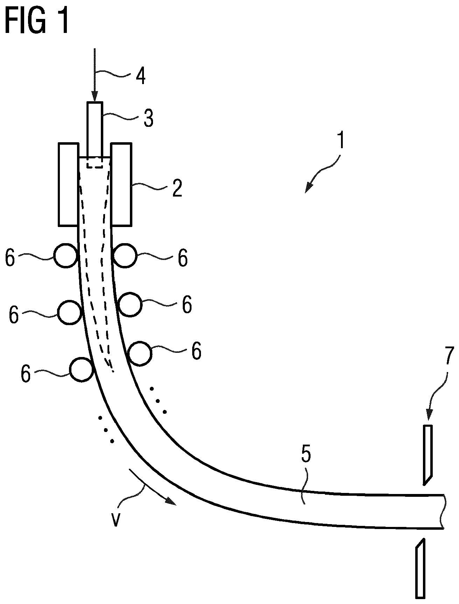

Gemäß FIG 1 weist eine Stranggießanlage 1 eine Stranggießkokille 2 auf. In die Stranggießkokille 2 wird - beispielsweise über ein schematisch angedeutetes Tauchrohr 3 - flüssiges Metall 4 gegossen, beispielsweise flüssiger Stahl. Die Stranggießkokille 2 bestimmt das Format des Metallstrangs 5. Es kann sich bei dem Format um ein Brammenformat, ein Knüppelformat oder ein anderes Format handeln.

Das flüssige Metall 4 erstarrt an den Wänden der Stranggießkokille 2 und wird als zunächst teilerstarrter und später durcherstarrter Metallstrang 5 aus der Stranggießkokille 2 abgezogen. Das Abziehen des Metallstrangs 5 erfolgt mit einer Abzugsgeschwindigkeit v. Die Abzugsgeschwindigkeit v liegt in aller Regel im Bereich von wenigen Metern pro Minute (m/min), beispielsweise zwischen 3 m/min und 10 m/min.

Der Metallstrang 5 wird in Abzugsrichtung gesehen hinter der Stranggießkokille 2 mittels einer Vielzahl von Strangführungsrollen 6 gestützt. In FIG 1 sind nur einige wenige der Strangführungsrollen 6 dargestellt. Die Strangführungsrollen 6 bilden in ihrer Gesamtheit eine der Stranggießkokille 2 nachgeordnete Strangführung. Es ist möglich, dass der Metallstrang 5 hinter der Strangführung unmittelbar aus der Gießhitze heraus gewalzt wird. Alternativ kann ein Ablängen des Metallstrangs 5 erfolgen, beispielsweise mittels einer schematisch angedeuteten Brennschneidmaschine 7.

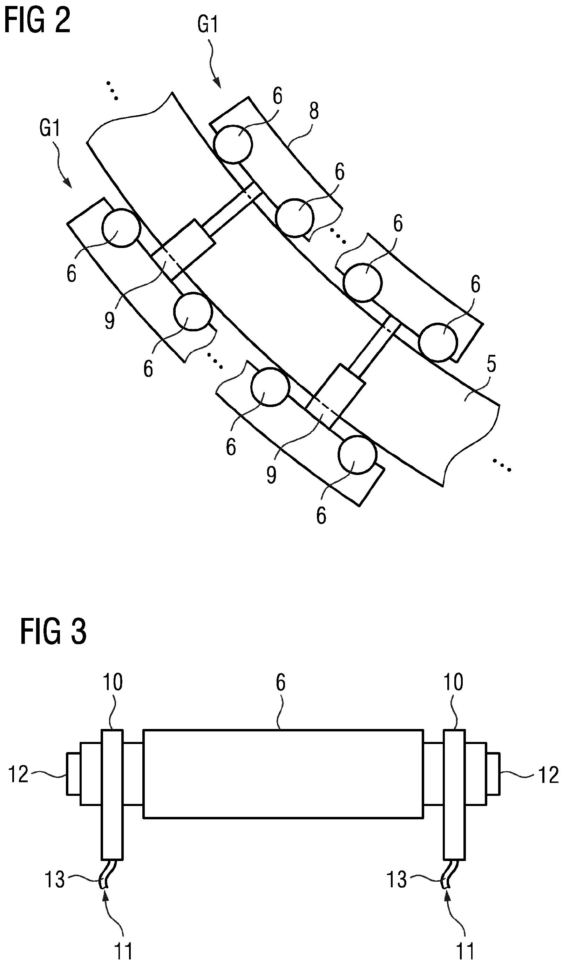

Die Strangführungsrollen 6 sind entsprechend der Darstellung in FIG 2 in Strangführungsabschnitten 8 angeordnet. Die Strangführungsabschnitte 8 sind daher - ebenso wie die Strangführungsrollen 6 selbst - der Stranggießkokille 2 nachgeordnet. FIG 2 zeigt eine übliche Ausgestaltung eines Strangführungsabschnitts 8. Im Rahmen dieser Ausgestaltung ist der Strangführungsabschnitt 8 als Rollensegment ausgebildet. Das Rollensegment weist, wie aus FIG 2 ohne weiteres erkennbar ist, eine erste und eine zweite Gruppe G1, G2 von Strangführungsrollen 6 auf. Die beiden Gruppen G1, G2 von Strangführungsrollen 6 weisen jeweils mehrere Strangführungsrollen 6 auf. Weiterhin liegen die Strangführungsrollen 6 der beiden Gruppen G1, G2 an gegenüberliegenden Seiten des gegossenen Metallstrangs 5 an und rollen dort jeweils ab. In der Regel ist weiterhin der Abstand der Strangführungsrollen 6 der ersten Gruppe G1 von den Strangführungsrollen 6 der zweiten Gruppe G2 über Stelleinrichtungen 9 einstellbar. Die Stelleinrichtungen 9 können beispielsweise als Hydraulikzylindereinheiten ausgebildet sein.

Unabhängig von der Ausgestaltung der Strangführungsabschnitte 8 als Rollensegmente ist jedoch entsprechend der Darstellung in FIG 3 in jedem Strangführungsabschnitt 8 mindestens eine Strangführungsrolle 6 gelagert. Die Lagerung der Strangführungsrolle 6 erfolgt über Rollenlager 10. Die Rollenlager 10 sind üblicherweise als Wälzlager ausgebildet.

Oftmals wird die Strangführungsrolle 6 entsprechend der Darstellung in FIG 3 mittels Kühlwassers 11 innen gekühlt. In diesem Fall kann die Strangführungsrolle 6 an mindestens einem Ende eine Drehdurchführung 12 aufweisen. Beispielsweise kann entsprechend der Darstellung in FIG 3 an beiden Enden der Strangführungsrolle 6 je eine Drehdurchführung 12 angeordnet sein. Die Drehdurchführungen 12 dienen dem Zuführen des Kühlwassers 11 zur Strangführungsrolle 6 und/oder dem Abführen des Kühlwassers 11 aus der Strangführungsrolle 6. An die Drehdurchführungen 12 sind starre oder flexible Versorgungsleitungen 13 angeschlossen, über welche das Kühlwasser 11 der Strangführungsrolle 6 zugeführt wird bzw. aus der Strangführungsrolle 6 abgeführt wird.

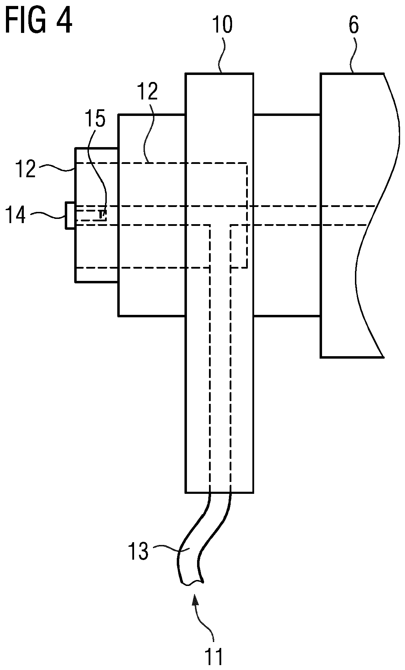

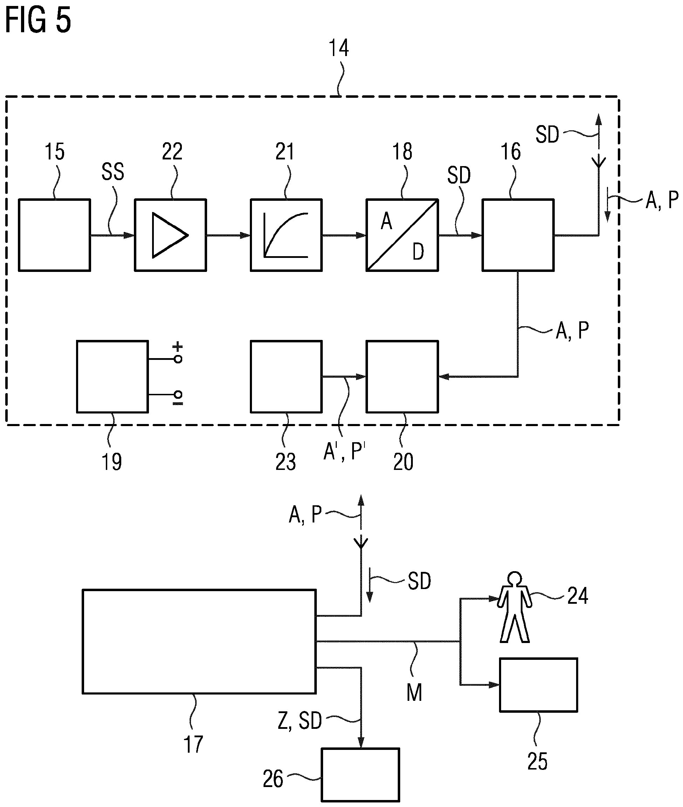

Entsprechend der vergrößerten Darstellung in FIG 4 weist der Strangführungsabschnitt 8 eine Sensoreinrichtung 14 auf. Die Sensoreinrichtung 14 weist gemäß dem Blockschaltbild von FIG 5 ihrerseits einen Schwingungssensor 15 auf. Der Schwingungssensor 15 - beispielsweise ein Schallsensor, insbesondere ein Ultraschallsensor - ist an die Strangführungsrolle 6 oder deren Rollenlager 10 akustisch angekoppelt. Dadurch ist der Schwingungssensor 15 in der Lage, die Schwingungen zu erfassen, die beim Drehen der Strangführungsrolle 6 in den Rollenlagern 10 auftreten. Ursache der Schwingungen können beispielsweise Verunreinigungen an den Rollenlagern 10 sein. Der Schwingungssensor 15 gibt ein mit den erfassten Schwingungen korrespondierendes Sensorsignal SS ab. Das Sensorsignal SS ist in aller Regel noch analog.

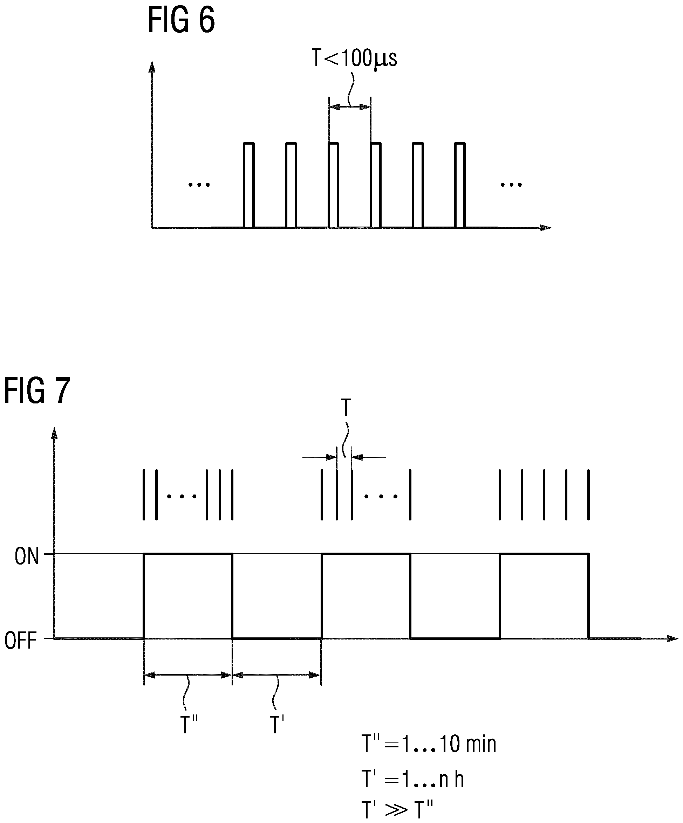

Der Schwingungssensor 15 erfasst die beim Drehen der Strangführungsrolle 6 auftretenden Schwingungen mit einer Abtastrate, die mindestens im zweistelligen kHz-Bereich liegt, also bei 10 kHz oder mehr. Entsprechend der Darstellung in FIG 6 liegt zwischen zwei unmittelbar aufeinanderfolgenden Erfassungen des jeweiligen Signalpegels der Schwingungen und dem entsprechenden Ausgeben des Sensorsignals SS eine Abtastzeit T von maximal 100 µs. Beispielsweise kann die Abtastzeit T bei 10 µs (entspricht einer Abtastrate von 100 kHz) oder 20 µs (entspricht einer Abtastrate von 50 kHz) oder 50 µs (entspricht einer Abtastrate von 20 kHz) liegen.

Im Rahmen der Ausgestaltung gemäß FIG 3, bei welcher die Strangführungsrolle 6 innen gekühlt ist, ist der Schwingungssensor 15 entsprechend der Darstellung in FIG 3 über das Kühlwasser 11 an die Strangführungsrolle 6 und/oder an die Rollenlager 10 akustisch angekoppelt. Der Schwingungssensor 15 (genauer: eine schwingungsempfindliche Oberfläche des Schwingungssensors 15) steht also, wie auch in FIG 5 schematisch angedeutet ist, in direktem Kontakt mit dem Kühlwasser 11. Das Kühlwasser 11 dient somit als Übertragungsmedium für die Schwingungen. Insbesondere kann der Schwingungssensor 15 zur guten Signalerfassung als Hydrophon ausgebildet sein.

Die Anordnung des Schwingungssensors 15 kann nach Belieben gewählt werden. Sofern (mindestens) eine Drehdurchführung 12 vorhanden ist, ist der Schwingungssensor 15 vorzugsweise an der Drehdurchführung 12 (bzw. einer der Drehdurchführungen 12) angeordnet. Er kann aber auch an einer anderen Stelle angeordnet sein. Sofern die Signalerfassung nicht über das Kühlwasser 11 erfolgt, kann der Schwingungssensor 15 auch an einer beliebigen anderen Stelle angeordnet sein, an der eine Signalerfassung möglich ist, insbesondere auch in unmittelbarer Nähe des zu überwachenden Rollenlagers 10.

Die Sensoreinrichtung 14 weist entsprechend der Darstellung in FIG 5 weitere Komponenten auf. Die wichtigste weitere Komponente ist eine Schnittstelle 16, über welche die Sensoreinrichtung 14 Schwingungsdaten SD an eine Auswertungseinrichtung 17 übermittelt. Die Schwingungsdaten SD sind in der Regel digitale Daten, die durch Digitalisierung der erfassten Sensorsignale SS beispielsweise in einem Analog-Digital-Wandler 18 entstehen. In jedem Fall aber sind die Schwingungsdaten SD aus den erfassten Schwingungen bzw. den Sensorsignalen SS abgeleitete Daten, deren Informationsgehalt mit den Sensorsignalen SS korrespondiert. Die Schnittstelle 16 ist vorzugsweise als leitungslose Schnittstelle ausgebildet, insbesondere als Funkschnittstelle.

Die Sensoreinrichtung 14 weist als weitere Komponente weiterhin vorzugsweise zumindest eine eigene, interne Energiequelle 19 auf. Die Sensoreinrichtung 14 benötigt in diesem Fall keine elektrischen Leitungen zur Energieversorgung. Weiterhin ist eine Steuereinrichtung 20 vorhanden, welche zumindest die Schnittstelle 16 und gegebenenfalls auch die anderen Komponenten der Sensoreinrichtung 14 steuert.

Es ist möglich, dass die Sensoreinrichtung 14 das Sensorsignal SS - gegebenenfalls nach der Digitalisierung - so wie es ist als Schwingungsdaten SD an die Auswertungseinrichtung 17 übermittelt. Vorzugsweise weist die Sensoreinrichtung 14 jedoch weitere Komponenten auf. Beispielsweise kann die Sensoreinrichtung 14 entsprechend der Darstellung in FIG 5 einen Filter 21 aufweisen, in dem eine Filterung erfolgt. Der Filter 21 kann in Richtung des Signalflusses gesehen nach Bedarf vor oder nach dem Analog-Digital-Wandler 18 angeordnet sein. Die Filterung kann nach Bedarf eine Hochpassfilterung, eine Tiefpassfilterung, eine Pegelbegrenzung usw. sein. Weiterhin kann die Sensoreinrichtung 14 einen Verstärker 22 aufweisen. Der Verstärker 22 verstärkt - vorzugsweise vor einer etwaigen Filterung, in jedem Fall aber vor der Analog-Digital-Wandlung - das analoge Sensorsignal SS.

Entsprechend der Darstellung in FIG 7 ist die Sensoreinrichtung 14 nur temporär aktiv. Beispielsweise kann die Sensoreinrichtung 14 jeweils immer dann von einem passiven Zustand OFF in einen aktivierten Zustand ON übergehen, wenn sie - siehe FIG 5 - über die Schnittstelle 16 einen Aktivierungsbefehl A erhält. Alternativ ist es möglich, dass die Sensoreinrichtung 14 - siehe ebenfalls FIG 5 - intern einen Zeitgeber 23 aufweist und jeweils immer dann in den aktivierten Zustand ON übergeht, wenn der Zeitgeber 23 den Ablauf einer bestimmten Zeitspanne T' meldet. In diesem Fall erfolgt der Übergang in den aktivierten Zustand ON also aufgrund eines intern
überwachten Zeitablaufs, so dass die Sensoreinrichtung 14 sich selbst aktiviert.

Den aktivierten Zustand behält die Sensoreinrichtung 14 für eine gewisse Zeitspanne T" bei. Die Zeitspanne T" liegt in der Regel im einstelligen Minutenbereich, beispielsweise zwischen 3 Minuten und 8 Minuten. Danach geht die Sensoreinrichtung 14 vom aktivierten Zustand ON wieder in den passiven Zustand OFF über. Beispielsweise kann mittels des Zeitgebers 23 der Ablauf der Zeitspanne T" überwacht werden. In diesem Fall erfolgt der Übergang in den passiven Zustand OFF also aufgrund eines intern überwachten Zeitablaufs, so dass die Sensoreinrichtung 14 sich selbst deaktiviert. Alternativ ist es möglich, dass die Sensoreinrichtung 14 jeweils immer dann in den passiven Zustand OFF übergeht, wenn sie über die Schnittstelle 16 einen Passivierungsbefehl P erhält. In diesem Fall muss die Einhaltung der Zeitspanne T" durch diejenige Einrichtung gewährleistet werden, welche den Passivierungsbefehl P an die Sensoreinrichtung 14 übermittelt. Die entsprechende Einrichtung kann beispielsweise die Auswertungseinrichtung 17 sein.

Die Zeitspanne T", während derer die Sensoreinrichtung 14 aktiviert ist, ist in der Regel erheblich kürzer als die Zeitspanne T' zwischen zwei unmittelbar aufeinanderfolgenden Aktivierungen. Beispielsweise kann die Zeitspanne T' 1 Stunde oder mehr betragen, auch mehrere Stunden und sogar mehrere Tage.

Aus FIG 7 ist auch ersichtlich, dass das Erfassen der beim Drehen der Strangführungsrolle 6 auftretenden Schwingungen durch den Schwingungssensor 15 ausschließlich im aktivierten Zustand ON der Sensoreinrichtung 14 erfolgt. Sofern eine sofortige Übermittlung an die Auswertungseinrichtung erfolgt, gilt das gleiche auch für die Übermittlung der aus den Sensorsignalen SS abgeleiteten Schwingungsdaten SD an die Auswertungseinrichtung 17 über die Schnittstelle 16.

Die Auswertungseinrichtung 17 wertet die Schwingungsdaten SD aus, welche die Sensoreinrichtung 14 an sie übermittelt. Die Auswertungseinrichtung 17 ermittelt im Rahmen dieser Auswertung den Zustand Z des mindestens einen Rollenlagers 10 der Strangführungsrolle 6. Mögliche Vorgehensweisen zur Ermittlung des Zustands Z werden später noch detailliert erläutert. Bereits jetzt sei jedoch erwähnt, dass die Auswertungseinrichtung 17 bei der Ermittlung des Zustands Z zusätzlich zu den Schwingungsdaten SD Betriebsdaten der Strangführungsrolle 6, des Strangführungsabschnitts 8 und/oder der Stranggießanlage 1 als Ganzes berücksichtigen kann. Dies wird aus den späteren Erläuterungen zu den möglichen Auswertungsarten noch ersichtlich werden.

Die Auswertungseinrichtung 17 übermittelt entsprechend der Darstellung in FIG 5 zumindest immer dann eine Meldung M an eine Bedienperson 24 und/oder ein Monitoringsystem 25, wenn sie im Rahmen der Auswertung einen kritischen Zustand des Rollenlagers 10 ermittelt. Es ist also zwar möglich, dass die Auswertungseinrichtung 17 auch dann eine Meldung M an die Bedienperson 24 und/oder das Monitoringsystem 25 ausgibt, wenn der ermittelte Zustand Z des Rollenlagers 10 unkritisch ist. Das Übermitteln der Meldung M kann in diesem Fall jedoch auch unterbleiben. Wenn der ermittelte Zustand Z hingegen kritisch ist, gibt die Auswertungseinrichtung 17 stets die Meldung M aus.

Weiterhin kann die Auswertungseinrichtung 17 die Schwingungsdaten SD entsprechend der Darstellung in FIG 5 in einer Speichereinrichtung 26 speichern. Diese Speicherung erfolgt nach Art einer Historie. Neu gespeicherte Schwingungsdaten SD treten also zu den bereits gespeicherten Schwingungsdaten SD hinzu, verdrängen diese aber nicht. Weiterhin werden den gespeicherten Daten jeweils Zeitinformationen zugeordnet, insbesondere eine Zeitangabe über die Erfassung der Schwingungsdaten. Weitere Daten können hinzukommen, beispielsweise über die Art und Weise der Auswertung oder über den Zeitpunkt der Auswertung. Alternativ oder zusätzlich zu den Schwingungsdaten SD kann die Auswertungseinrichtung 17 in der Speichereinrichtung 26 auf die gleiche Art und Weise auch den ermittelten Zustand Z und gegebenenfalls auch weitere Daten abspeichern. Ein Beispiel von weiteren, sinnvollerweise abgespeicherten Daten ist eine Quittierung der Bedienperson 24, mit welcher die Bedienperson 24 oder das Monitoringsystem 25 einen gemeldeten kritischen Zustand quittiert hat.

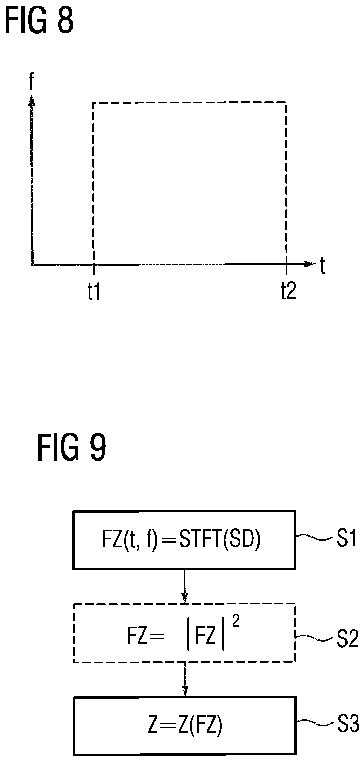

Im Rahmen der Auswertung der ermittelten Schwingungsdaten SD ermittelt die Auswertungseinrichtung 17 zunächst eine zweidimensionale Frequenzzerlegung FZ der Schwingungsdaten SD. Sie ermittelt also ein zweidimensionales Feld, bei dem entsprechend der Darstellung in FIG 8 je eine der beiden Dimensionen der Frequenzzerlegung FZ - also die Eingangsgrößen der Frequenzzerlegung FZ - die Zeit t und die Frequenz f sind und bei dem die Ausgangsgröße den Anteil der Schwingungsdaten SD angibt, der zu der jeweiligen Zeit t bei der jeweiligen Frequenz f vorliegt.

Auf der Zeitachse erstreckt sich die Frequenzzerlegung FZ von einer Anfangszeit t1 zu einer Endzeit t2. Die Anfangszeit t1 und die Endzeit t2 sind diejenigen Zeiten, während derer die Sensorsignale SS von dem Schwingungssensor 14 während einer jeweiligen Aktivierung erfasst werden. Die Erstreckung auf der Frequenzachse kann nach Bedarf sein. Der als Funktion der Zeit t und der Frequenz f ermittelte Anteil kann ein komplexer Wert oder - hiermit gleichwertig - ein Paar reeller Werte - oder ein einzelner reeller Wert sein.

Zur Ermittlung der Frequenzzerlegung FZ kann die Auswertungseinrichtung 17 entsprechend der Darstellung in FIG 9 beispielsweise in einem Schritt S1 eine Kurzzeit-Fouriertransformation (englisch: short time fourier transformation) der Schwingungsdaten SD durchführen. Die Kurzzeit-Fouriertransformation ergibt zunächst die komplexen Anteile (oder, was hiermit gleichwertig ist, für gleiche Frequenzen die Aufteilung in Sinus und Kosinus). Weiterhin kann die Auswertungseinrichtung 17 sodann in einem Schritt S2 anhand der komplexen Anteile reelle Anteile ermitteln. Insbesondere kann sie den Betrag oder das Quadrat des Betrages des jeweiligen komplexen Anteils ermitteln. In diesem Fall gibt die Frequenzzerlegung FZ direkt den Energieinhalt E für den jeweiligen Zeitpunkt t und die jeweilige Frequenz f an. In einem Schritt S3 wertet die Auswertungseinrichtung 17 sodann die Frequenzzerlegung FZ aus. Diese Auswertung dient der Ermittlung des Zustands Z des mindestens einen Rollenlagers 10. Möglichkeiten zur Implementierung des Schrittes S3 von FIG 9 werden nachstehend in Verbindung mit den weiteren FIG erläutert.

Der Schritt S2 ist nur optional und deswegen in FIG 9 nur gestrichelt dargestellt. In aller Regel ist der Schritt S2 jedoch vorhanden. Auch nachstehend wird stets angenommen, dass die Frequenzzerlegung FZ gemäß den Schritten S1 und S2 vorgenommen wird, dass die sich ergebende Frequenzzerlegung FZ also bereits das Quadrat des Betrages der Kurzzeit-Fouriertransformation liefert.

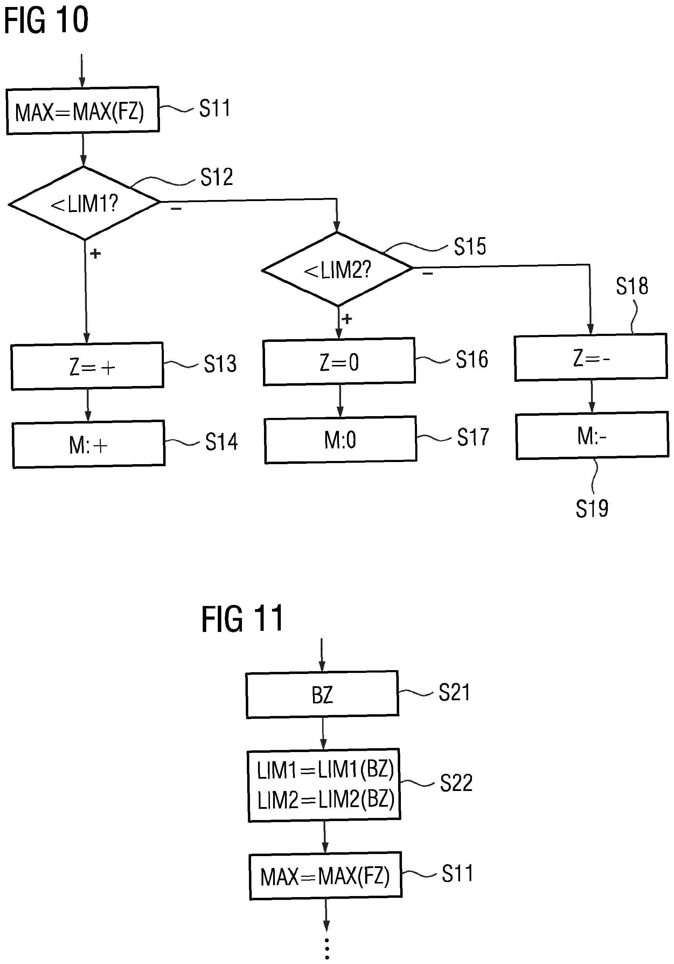

In einer möglichen Ausgestaltung des Schrittes S3 von FIG 9 kann die Auswertungseinrichtung 17 beispielsweise entsprechend der Darstellung in FIG 10 in einem Schritt S11 das Maximum MAX der Frequenzzerlegung FZ ermitteln. In einem Schritt S12 vergleicht die Auswertungseinrichtung 17 in diesem Fall das ermittelte Maximum MAX mit einer unteren Schranke LIM1. Liegt das Maximum MAX unter der unteren Schranke LIM1, so setzt die Auswertungseinrichtung 17 in einem Schritt S13 den Zustand Z auf den Wert "gut", in FIG 10 durch "+" symbolisiert. Optional kann die Auswertungseinrichtung 17 in einem nachfolgenden Schritt S14 eine entsprechende Meldung M ausgeben. Liegt das Maximum MAX hingegen über der unteren Schranke LIM1, so geht die Auswertungseinrichtung 17 zu einem Schritt S15 über. Im Schritt S15 vergleicht die Auswertungseinrichtung 17 das ermittelte Maximum MAX mit einer oberen Schranke LIM2. Die obere Schranke LIM2 ist - selbstverständlich - größer als die untere Schranke LIM1. Liegt das Maximum MAX unter der oberen Schranke LIM2, so setzt die Auswertungseinrichtung 17 in einem Schritt S16 den Zustand Z auf den Wert "mittelmäßig" (in FIG 10 durch "0" symbolisiert) und gibt in einem Schritt S17 eine entsprechende Meldung M aus. Liegt das Maximum MAX über der oberen Schranke LIM2, so setzt die Auswertungseinrichtung 17 in einem Schritt S18 den Zustand Z auf den Wert "schlecht" (in FIG 10 durch "-" symbolisiert) und gibt in einem Schritt S19 eine entsprechende Meldung M aus.

Die untere Schranke LIM1 und die obere Schranke LIM2 sind geeignet gewählt. Sie können beispielsweise im Rahmen von Versuchen ermittelt und festgelegt werden. Weiterhin ist es möglich, dass die untere Schranke LIM1 und/oder die obere Schranke LIM2 zeitvariabel sind. Beispielsweise kann die Auswertungseinrichtung 17 entsprechend der Darstellung in FIG 11 vor der Ausführung der Schritte S11 bis S19 in einem Schritt S21 einen Betriebszustand BZ der Stranggießanlage 1 entgegennehmen und in einem Schritt S22 die untere Schranke LIM1 und/oder die obere Schranke LIM2 in Abhängigkeit vom Betriebszustand BZ der Stranggießanlage 1 bestimmen.

Obiges Beispiel, bei dem eine untere und eine obere Schranke LIM1, LIM2 definiert werden, ist rein beispielhaft. Es kann auch nur eine einzige Schranke vorgegeben sein. Weiterhin können auch mehr als zwei Schranken vorgegeben sein.

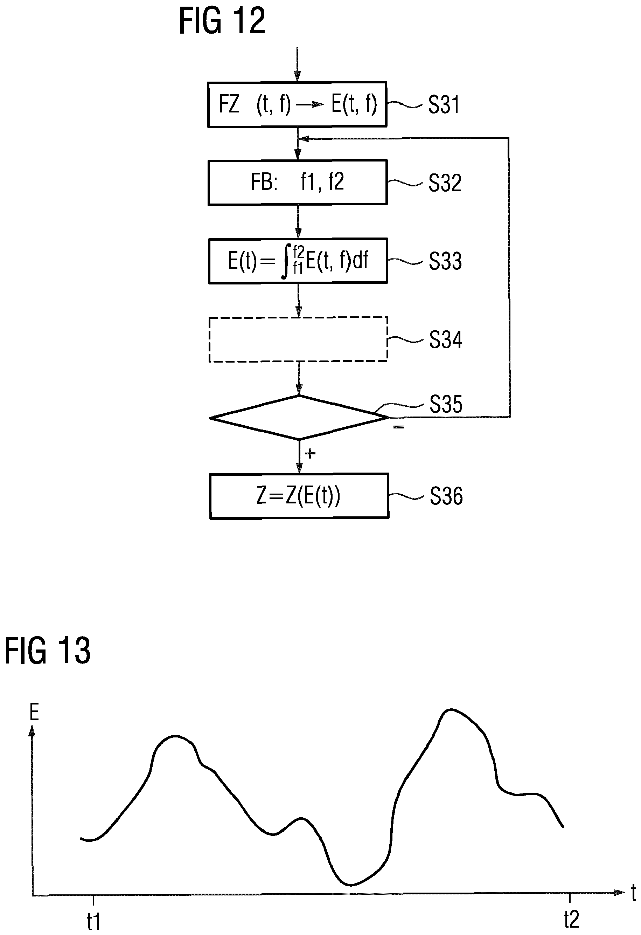

In einer weiteren möglichen Ausgestaltung des Schrittes S3 von FIG 9 kann die Auswertungseinrichtung 17 entsprechend der Darstellung in FIG 12 in einem Schritt S31 einen Energieinhalt E der Frequenzzerlegung FZ ermitteln. Im einfachsten Fall ist der Schritt S31 trivialer Natur, weil die Ermittlung des Energieinhaltes E bereits Gegenstand des Schrittes S1 war. Anderenfalls muss er explizit durchgeführt werden. Falls die Auswertungseinrichtung 17 im Schritt S1 beispielsweise den (komplexen) Anteil ermittelt, wird im Schritt S31 jeweils das Quadrat des Betrages des Anteils (bzw. das Produkt des Anteils mit dem konjugiert Komplexen des Anteils) ermittelt. Die Ermittlung des Schrittes S31 erfolgt jedoch stets in beiden Dimensionen (also sowohl der Zeit t als auch der Frequenz f) aufgelöst.

In einem Schritt S32 selektiert die Auswertungseinrichtung 17 ein vorbestimmtes Frequenzband FB. Das selektierte Frequenzband FB erstreckt sich von einer unteren Grenzfrequenz f1 bis zu einer oberen Grenzfrequenz f2. Der guten Ordnung halber wird hierbei darauf hingewiesen, dass der Begriff "Grenzfrequenz" im Rahmen der vorliegenden Erfindung nichts mit Signalfilterungen und dortigen Grenzfrequenzen zu tun hat. Der Begriff "Grenzfrequenz" bezeichnet lediglich die untere bzw. obere Grenze des Frequenzbandes FB.

In einem nachfolgenden Schritt S33 ermittelt die Auswertungseinrichtung 17 den Energieinhalt des selektierten Frequenzbandes FB als Funktion der Zeit t. Sie bildet also das Integral des Energieinhalts E über die Frequenz f von unteren Grenzfrequenz f1 bis zur oberen Grenzfrequenz f2. Da, wie bereits erwähnt, im Rahmen der vorliegenden Erfindung angenommen wird, dass bereits die Frequenzzerlegung FZ direkt den Energieinhalt für den jeweiligen Zeitpunkt t und die jeweilige Frequenz f angibt, kann im Schritt S33 das Integral der Frequenzzerlegung FZ selbst gebildet werden.

In einem optionalen Schritt S34 kann die Auswertungseinrichtung 17 sodann eine Filterung des ermittelten Energieinhalts E durchführen, insbesondere eine zeitliche Mittelung. Sofern die Filterung durchgeführt wird, ist die Filterung auf einen erheblich kürzeren Zeitraum bezogen als der Zeitraum, für den die Schwingungsdaten SD erfasst wurden und für den demzufolge auch die Frequenzzerlegung FZ ermittelt wird. Wenn - beispielsweise -die Differenz zwischen der Endzeit t2 und der Anfangszeit t1 5 Minuten beträgt, kann eine Filterung für einen Zeitrahmen von beispielsweise jeweils 1 s erfolgen. Die genannten Zahlenwerte sind rein beispielhaft, zeigen aber das Prinzip.

In einem Schritt S35 prüft die Auswertungseinrichtung 17, ob sie den Schritt S33 und gegebenenfalls auch den Schritt S34 für alle Frequenzbänder FB durchgeführt hat. Wenn dies nicht der Fall ist, geht die Auswertungseinrichtung 17 zum Schritt S32 zurück. Bei der erneuten Ausführung des Schrittes S32 selektiert die Auswertungseinrichtung 17 ein anderes Frequenzband FB, für das sie den Schritt S33 und gegebenenfalls auch den Schritt S34 noch nicht durchgeführt hat.

Anderenfalls geht die Auswertungseinrichtung 17 zu einem Schritt S36 über, in dem die weitere Auswertung erfolgt. Diese Auswertung basiert auf den zuvor ermittelten Energieinhalten E. Insbesondere verwertet die Auswertungseinrichtung 17 im Schritt S36 nicht nur den bei der letzten Ausführung des Schrittes S33 ermittelten Energieinhalt E, sondern die ermittelten Energieinhalte E aller Frequenzbänder FB.

Die Vorgehensweise gemäß FIG 12 liefert für die Frequenzbänder FB jeweils den zeitlichen Verlauf des Energieinhalts E. ein möglicher zeitlicher Verlauf ist in FIG 13 für ein einzelnes Frequenzband FB dargestellt.

Die Anzahl an Frequenzbändern FB, für welche jeweils der Energieinhalt E als Funktion der Zeit t ermittelt wird, kann nach Bedarf bestimmt sein. Minimal wird nur ein einziges Frequenzband FB verwertet. In der Regel wird der Energieinhalt E jedoch für mehrere Frequenzbänder FB ermittelt. Meist liegt die Anzahl an Frequenzbändern FB zwischen drei und acht. Falls der Energieinhalt E für mehrere Frequenzbänder FB ermittelt wird, sind die Frequenzbänder FB in der Regel weiterhin voneinander getrennt (disjunkt). Sie überlappen sich also nicht. Wenn - rein beispielsweise - eines der Frequenzbänder FB sich von einer unteren Grenzfrequenz f1 von 100 Hz bis zu einer oberen Grenzfrequenz f2 von 200 Hz erstreckt, so ist dieser Frequenzbereich für alle anderen Frequenzbänder FB sozusagen eine verbotene Zone. Ein anderes Frequenzband FB, das eine obere Grenzfrequenz f2 oberhalb von 200 Hz aufweist - rein beispielhaft von 500 Hz - kann also zwar eine untere Grenzfrequenz f1 von beispielsweise 300 Hz aufweisen. Die untere Grenzfrequenz f1 dieses anderen Frequenzbandes FB kann auch noch kleiner als 300 Hz sein. Keinesfalls sollte die Grenzfrequenz f1 dieses anderen Frequenzbandes FB aber kleiner als 200 Hz sein. Der Grenzfall, dass die obere Grenzfrequenz f2 eines Frequenzbandes FB gleich der unteren Grenzfrequenz f1 eines anderen Frequenzbandes FB ist, ist jedoch gerade noch zulässig.

In einer konkreten Implementierung der vorliegenden Erfindung wurde in Versuchen mit vier Frequenzbändern FB gearbeitet. In diesem Versuch erstreckte sich ein Frequenzband FB von 7 kHz bis 11 kHz, ein weiteres Frequenzband FB von 11 kHz bis 15 kHz, ein weiteres Frequenzband FB von 30 kHz bis 37 kHz und ein weiteres Frequenzband FB von 42 kHz bis 49 kHz. Das erstgenannte und das zweitgenannte Frequenzband FB grenzen also gerade noch aneinander an, während das zweitgenannte Frequenzband FB und die beiden weiteren Frequenzbänder FB jeweils voneinander beabstandet sind.

Nachfolgend werden in Verbindung mit den weiteren FIG mögliche Implementierungen des Schrittes S36 erläutert.

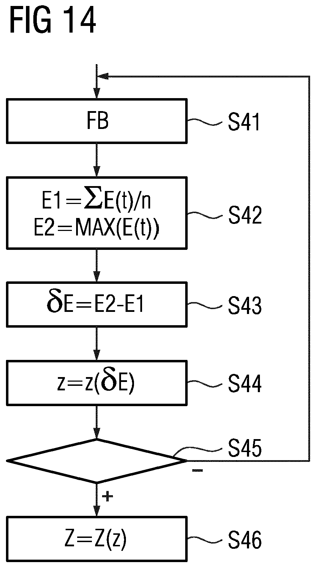

In einer möglichen Ausgestaltung des Schrittes S36 von FIG 12 kann die Auswertungseinrichtung 17 entsprechend der Darstellung in FIG 14 in einem Schritt S41 eines der Frequenzbänder FB selektieren. Innerhalb des selektierten Frequenzbandes FB ermittelt die Auswertungseinrichtung 17 in einem Schritt S42 einen Mittelwert E1 der Energieinhalte E und einen Maximalwert E2 der Energieinhalte E. In einem Schritt S43 bildet die Auswertungseinrichtung 17 die Differenz δE von Maximalwert E2 und Mittelwert E1 der Energieinhalte E. In einem Schritt S44 ermittelt die Auswertungseinrichtung 17 sodann einen Vorzustand z für den selektierten Frequenzbereich FB. Diese Ermittlung erfolgt anhand der Differenz δE. Beispielsweise ist es möglich, dass die Auswertungseinrichtung 17 im Schritt S44 als Vorzustand z den Wert "gut" ermittelt, wenn die Differenz δE unter einer vorbestimmten Schranke liegt, und anderenfalls als Vorzustand z den Wert "schlecht" ermittelt. Die vorbestimmte Schranke kann relativ klein sein. Insbesondere kann sie zwischen 1 % und 10 % des Mittelwerts E1 liegen, beispielsweise zwischen 2 % und 5 %.

In einem Schritt S45 prüft die Auswertungseinrichtung 17, ob sie die Schritte S42 bis S44 für alle Frequenzbänder FB durchgeführt hat. Wenn dies nicht der Fall ist, geht die Auswertungseinrichtung 17 zum Schritt S41 zurück. Bei der erneuten Ausführung des Schrittes S41 selektiert die Auswertungseinrichtung 17 ein anderes Frequenzband FB, für das sie die Schritte S42 bis S44 noch nicht durchgeführt hat.

Anderenfalls geht die Auswertungseinrichtung 17 zu einem Schritt S46 über, in dem die weitere Auswertung erfolgt. Insbesondere ermittelt die Auswertungseinrichtung 17 im Schritt S46 den Zustand Z unter Verwertung der Vorzustände z. Beispielsweise ist es möglich, dass die Auswertungseinrichtung 17 als Zustand Z
- den Wert "gut" ermittelt, wenn hinreichend viele - insbesondere alle - Vorzustände z "gut" sind,
- den Wert "schlecht" ermittelt, wenn hinreichend viele - insbesondere alle - Vorzustände z "schlecht" sind, und
- anderenfalls den Wert "mittelmäßig" ermittelt.

Auch andere Vorgehensweisen sind möglich, dass beispielsweise dass der Zustand Z ausschließlich anhand der Anzahl an schlechten Vorzuständen z ermittelt wird. Auch ist es möglich, als Zustand Z ausschließlich den Wert "gut" oder den Wert "schlecht" zu ermitteln.

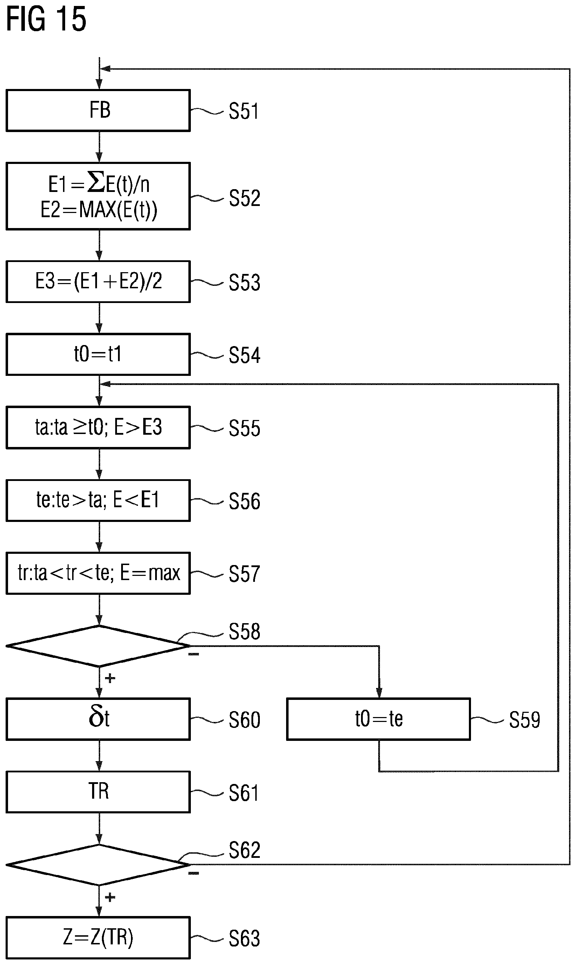

In einer weiteren möglichen Ausgestaltung des Schrittes S36 von FIG 12 kann die Auswertungseinrichtung 17 entsprechend der Darstellung in FIG 15 in einem Schritt S51 - analog zum Schritt S41 von FIG 14 - eines der Frequenzbänder FB selektieren. Innerhalb des selektierten Frequenzbandes FB ermittelt die Auswertungseinrichtung 17 in einem Schritt S52 - analog zum Schritt S42 von FIG 14 - einen Mittelwert E1 der Energieinhalte E und einen Maximalwert E2 der Energieinhalte E. In einem Schritt S53 ermittelt die Auswertungseinrichtung 17 einen Zwischenwert E3 zwischen dem Maximalwert E2 und Mittelwert E1 der Energieinhalte E. Beispielsweise kann die Auswertungseinrichtung 17 die Summe von Maximalwert E2 und Mittelwert E1 bilden und diese Summe durch 2 dividieren.

Sodann analysiert die Auswertungseinrichtung 17 den zeitlichen Verlauf der ermittelten Energieinhalte E. Konkret setzt die Auswertungseinrichtung 17 in einem Schritt S54 einen Startzeitpunkt t0 auf die Anfangszeit t1. In einem Schritt S55 ermittelt die Auswertungseinrichtung 17 sodann einen Anfangszeitpunkt ta. Der Anfangszeitpunkt ta ist derjenige Zeitpunkt, zu dem - ausgehend von dem Startzeitpunkt t0 - der Energieinhalt E den Zwischenwert E3 erstmals überschreitet. Ausgehend von dem ermittelten Anfangszeitpunkt ta ermittelt die Auswertungseinrichtung 17 in einem Schritt S56 sodann einen Endzeitpunkt te. Der Endzeitpunkt te ist derjenige Zeitpunkt, zu dem - ausgehend von dem Anfangszeitpunkt ta - der Energieinhalt E den Mittelwert E1 erstmals wieder unterschreitet. Sodann ermittelt die Auswertungseinrichtung 17 in einem Schritt S57 einen resultierenden Zeitpunkt tr. Der resultierende Zeitpunkt tr ist derjenige Zeitpunkt, der innerhalb des Zeitintervalls vom Anfangszeitpunkt ta zum Endzeitpunkt te liegt und innerhalb dieses Zeitintervalls den maximalen Energieinhalt E aufweist.

In einem Schritt S58 prüft die Auswertungseinrichtung 17, ob sie, ausgehend von dem bisherigen Endzeitpunkt te als neuem Anfangszeitpunkt ta, die Schritte S55 bis S58 erneut ausführen soll. Wenn dies der Fall ist, geht die Auswertungseinrichtung 17 zu einem Schritt S59 über. Im Schritt S59 setzt die Auswertungseinrichtung 17 als neuen Anfangszeitpunkt ta den bisherigen Endzeitpunkt te fest. Sodann geht sie zum Schritt S55 zurück. Im Ergebnis werden dadurch innerhalb des jeweiligen Frequenzbandes FB alle resultierenden Zeitpunkte tr ermittelt.

Wenn die Ermittlung der resultierenden Zeitpunkte tr für das momentan betrachtete Frequenzband FB abgeschlossen ist, geht die Auswertungseinrichtung 17 zu einem Schritt S60 über. Im Schritt S61 ermittelt die Auswertungseinrichtung 17 die zeitlichen Abstände δt unmittelbar aufeinanderfolgender resultierender Zeitpunkte tr. Anhand der zeitlichen Abstände δt ermittelt die Auswertungseinrichtung 17 sodann in einem Schritt S62 eine Periode TR für die resultierenden Zeitpunkte tr. Beispielsweise kann die Auswertungseinrichtung 17 den Mittelwert der zeitlichen Abstände δt bilden und diesen Mittelwert als Periode TR ansehen. Die Auswertungseinrichtung 17 kann daher ansetzen, dass der Energieinhalt E innerhalb des selektierten Frequenzbandes FB im Mittel mit der Periode TR variiert.

In einem Schritt S62 prüft die Auswertungseinrichtung 17, ob sie die Schritte S52 bis S61 bereits für alle Frequenzbänder FB durchgeführt hat. Wenn dies nicht der Fall ist, geht die Auswertungseinrichtung 17 zum Schritt S51 zurück. Bei der erneuten Ausführung des Schrittes S51 selektiert die Auswertungseinrichtung 17 ein anderes Frequenzband FB, für das sie die Schritte S52 bis S61 noch nicht durchgeführt hat.

Anderenfalls geht die Auswertungseinrichtung 17 zu einem Schritt S63 über, in dem die weitere Auswertung erfolgt. Diese Auswertung basiert auf den zuvor ermittelten Perioden TR. Insbesondere ist zu erwarten, dass die ermittelten Perioden TR umso mehr übereinstimmen, je schlechter der Zustand Z des Rollenlagers 10 ist. Die Auswertungseinrichtung 17 kann daher beispielsweise prüfen, wie nahe die für die verschiedenen Frequenzbänder FB ermittelten Perioden TR beieinanderliegen. Liegen die ermittelten Perioden TR nahe beieinander, wird dem Zustand Z der Wert "schlecht" zugeordnet. Liegen die ermittelten Perioden TR weit auseinander, wird dem Zustand Z der Wert "gut" zugeordnet. Liegt weder der eine noch der andere Fall vor, wird dem Zustand Z der Wert "mittelmäßig" zugeordnet.

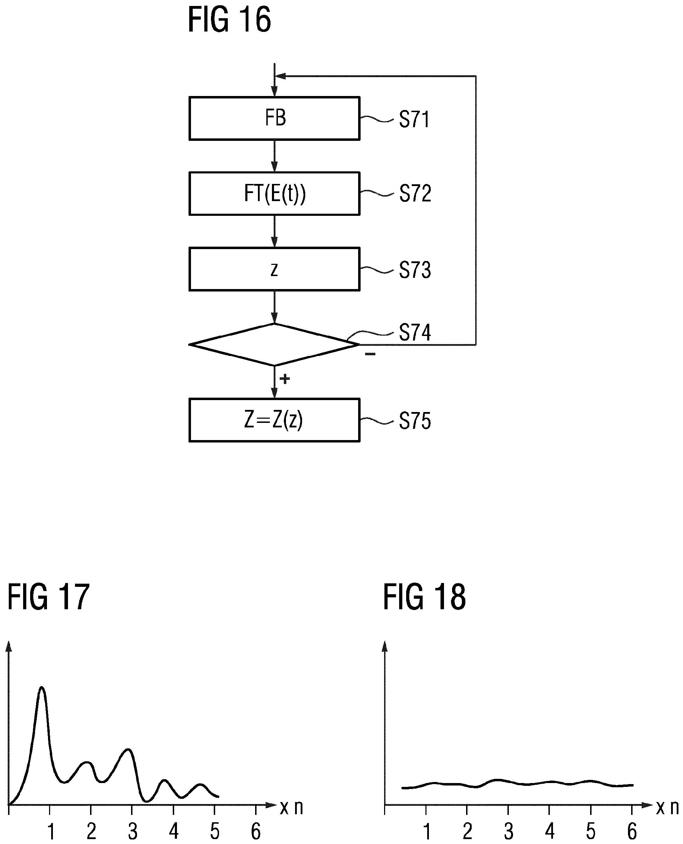

In einer weiteren möglichen Ausgestaltung des Schrittes S36 von FIG 12 kann die Auswertungseinrichtung 17 entsprechend der Darstellung in FIG 16 in einem Schritt S71 - analog zum Schritt S41 von FIG 14 - eines der Frequenzbänder FB selektieren. Innerhalb des selektierten Frequenzbandes FB führt die Auswertungseinrichtung 17 in einem Schritt S72 eine Frequenzanalyse des ermittelten Energieinhalts E durch. Beispielsweise kann die Auswertungseinrichtung 17 im Schritt S72 eine Fouriertransformation des Energieinhalts E ermitteln. FIG 17 und FIG 18 zeigen rein beispielhaft mögliche Ergebnisse einer derartigen Fouriertransformation, also die Fouriertransformierte möglicher Energieinhalte E eines Frequenzbandes FB. Die auf der Abszisse eingetragenen Zahlen sind auf die Drehzahl der betrachteten Strangführungsrolle 6 normiert und dadurch zur Drehzahl der betrachteten Strangführungsrolle 6 in Bezug gesetzt.

Wenn, wie in FIG 17 dargestellt, bei der Drehzahl der betrachteten Strangführungsrolle 6 und ganzzahligen Vielfachen davon nennenswerte Amplituden auftreten, kann dies als Indiz dafür gewertet werden, dass der Zustand Z des Rollenlagers 10 schlecht ist. Als Vorzustand z für das betrachtete Frequenzband FB kann somit der Wert "schlecht" angesetzt werden, sofern derartige nennenswerte Amplituden auftreten. Sind hingegen, wie in FIG 18 dargestellt, keine nennenswerten Amplituden vorhanden, kann als Vorzustand z für das betrachtete Frequenzband FB der Wert "gut" angesetzt werden. Die Auswertungseinrichtung 17 kann somit in einem Schritt S73 die entsprechenden Anteile ermitteln, die Anteile mit Grenzwerten vergleichen und in Abhängigkeit von dem Vergleich den Vorzustand z für das selektierte Frequenzband FB ermitteln.

In einem Schritt S74 prüft die Auswertungseinrichtung 17, ob sie die Schritte S72 und S73 bereits für alle Frequenzbänder FB durchgeführt hat. Wenn dies nicht der Fall ist, geht die Auswertungseinrichtung 17 zum Schritt S71 zurück. Bei der erneuten Ausführung des Schrittes S71 selektiert die Auswertungseinrichtung 17 ein anderes Frequenzband FB, für das sie die Schritte S72 und S73 noch nicht durchgeführt hat.

Anderenfalls geht die Auswertungseinrichtung 17 zu einem Schritt S75 über, in dem die weitere Auswertung erfolgt. Insbesondere ermittelt die Auswertungseinrichtung 17 im Schritt S75 den Zustand Z unter Verwertung der Vorzustände z. Beispielsweise ist es möglich, dass die Auswertungseinrichtung 17 analog zum Schritt S46 von FIG 14 als Zustand Z
- den Wert "gut" ermittelt, wenn hinreichend viele - insbesondere alle - Vorzustände z "gut" sind,
- den Wert "schlecht" ermittelt, wenn hinreichend viele - insbesondere alle - Vorzustände z "schlecht" sind, und
- anderenfalls den Wert "mittelmäßig" ermittelt.

Auch hier sind, analog zu FIG 14, andere Vorgehensweisen möglich. Insbesondere kann der Zustand Z ausschließlich anhand der Anzahl an schlechten Vorzuständen z ermittelt werden.

Die vorliegende Erfindung wurde obenstehend in Verbindung mit einem einzigen Sensor 15 und eine einzigen Sensoreinrichtung 14 erläutert. Die vorliegende Erfindung ist aber ebenso ausführbar, wenn für eine einzelne Strangführungsrolle 6 mehrere Sensoren 15 und/oder mehrere Sensoreinrichtungen 14 vorhanden sind. Auch wird die vorliegende Erfindung in aller Regel für alle Strangführungsrollen 6 ausgeführt. Weiterhin wurde die vorliegende Erfindung in Verbindung mit einer Ausgestaltung erläutert, bei welcher die Schwingungsdaten SD sofort nach dem Erfassen der Sensorsignale SS an die Auswertungseinrichtung 17 übermittelt werden. Es ist aber ebenso denkbar, die Schwingungsdaten SD zunächst innerhalb der Sensoreinrichtung 14 zu speichern und erst zu einem späteren Zeitpunkt an die Auswertungseinrichtung 17 zu übermitteln. Beispielsweise kann die Sensoreinrichtung 14 in bestimmten Zeitabständen - siehe die Erläuterungen zu FIG 7 - jeweils eine Messsequenz erfassen und abspeichern. In diesem Fall kann beispielsweise während einer Stillstandszeit der Stranggießanlage 1 die Auswertungseinrichtung 17 kurzzeitig mit der Schnittstelle 16 verbunden werden und können die Schwingungsdaten SD mehrerer Messsequenzen kumuliert ausgelesen werden.

Die vorliegende Erfindung weist viele Vorteile auf. Zunächst kann auf einfache und zuverlässige Art und Weise eine Signalerfassung auch im laufenden Betrieb der Stranggießanlage 1 erfolgen. Weiterhin kann auf zuverlässige Art und Weise auch eine Auswertung der erfassten Sensorsignale SS bzw. der daraus abgeleiteten Schwingungsdaten SD erfolgen. Weiterhin können sowohl die Signalerfassung als auch die Signalauswertung automatisiert erfolgen. Im Falle einer sofortigen Übermittlung der Schwingungsdaten SD an die Auswertungseinrichtung 17 können auch im laufenden Betrieb der Stranggießanlage 1 auftretende Probleme der Strangführungsrollen 6 bzw. deren Rollenlager 10 sofort erkannt werden. Beschädigte und verschlissene Strangführungsrollen 6 können ohne weiteres identifiziert und lokalisiert werden. Es können bereits während des Betriebs der Stranggießanlage 1 Wartungsmaßnahmen geplant werden, die beim nächsten Stillstand der Stranggießanlage durchgeführt werden sollen. Die Verfügbarkeit und Zuverlässigkeit der Stranggießanlage 1 werden gesteigert. Falls für eine einzelne Strangführungsrolle 6 mehrere Schwingungssensoren 15 verwendet werden, kann unter Umständen auch innerhalb einer einzelnen Strangführungsrolle 6 lokalisiert werden, welches Rollenlager 10 defekt oder verschlissen ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Stranggießanlage
- 2: Stranggießkokille
- 3: Tauchrohr
- 4: flüssiges Metall
- 5: Metallstrang
- 6: Strangführungsrollen
- 7: Brennschneidmaschine
- 8: Strangführungsabschnitte
- 9: Stelleinrichtungen
- 10: Rollenlager
- 11: Kühlwasser
- 12: Drehdurchführungen
- 13: Versorgungsleitungen
- 14: Sensoreinrichtung
- 15: Schwingungssensor
- 16: Schnittstelle
- 17: Auswertungseinrichtung
- 18: Analog-Digital-Wandler
- 19: Energiequelle
- 20: Steuereinrichtung
- 21: Filter
- 22: Verstärker
- 23: Zeitgeber
- 24: Bedienperson
- 25: Monitoringsystem
- 26: Speichereinrichtung
- A, A': Aktivierungsbefehle
- BZ: Betriebszustand
- E: Energieinhalt
- E1: Mittelwert der Energieinhalte
- E2: Maximalwert der Energieinhalte
- E3: Zwischenwert
- f: Frequenz
- f1, f2: Grenzfrequenzen
- FB: Frequenzbänder
- FZ: Frequenzzerlegung
- G1, G2: Gruppen von Strangführungsrollen
- LIM1, LIM2: Schranken
- M: Meldung
- MAX: Maximum der Frequenzzerlegung
- OFF: passiver Zustand
- ON: aktivierter Zustand
- P, P': Passivierungsbefehle
- S1 bis S75: Schritte
- SD: Schwingungsdaten
- SS: Sensorsignal
- t: Zeit bzw. Zeitpunkte
- t0: Startzeitpunkt
- t1: Anfangszeit
- t2: Endzeit
- ta: Anfangszeitpunkt
- te: Endzeitpunkt
- tr: resultierender Zeitpunkt
- T: Abtastzeit
- T', T": Zeitspannen
- TR: Periode
- v: Abzugsgeschwindigkeit
- Z: Zustand
- z: Vorzustände
- δE: Differenz von Energiewerten
- δt: zeitliche Abstände

## Patentansprüche

1. Strangführungsabschnitt einer Stranggießanlage (1),
- wobei der Strangführungsabschnitt einer Stranggießkokille (2) der Stranggießanlage (1) nachgeordnet ist,
- wobei der Strangführungsabschnitt mindestens eine Strangführungsrolle (6) zum Stützen eines mit der Stranggießkokille (2) gegossenen Metallstrangs (5) aufweist,
- wobei die Strangführungsrolle (6) in dem Strangführungsabschnitt in Rollenlagern (10) gelagert ist,
**dadurch gekennzeichnet,**
- **dass** der Strangführungsabschnitt mindestens eine Sensoreinrichtung (14) aufweist, die ihrerseits mindestens einen an die Strangführungsrolle (6) oder deren Rollenlager (10) akustisch angekoppelten Schwingungssensor (15) aufweist, mittels dessen die beim Drehen der Strangführungsrolle (6) in den Rollenlagern (10) auftretenden Schwingungen erfassbar sind, und
- **dass** die Sensoreinrichtung (14) eine Schnittstelle (16) aufweist, über die aus den erfassten Schwingungen abgeleitete Schwingungsdaten (SD) an eine Auswertungseinrichtung (17) übermittelbar sind.

2. Strangführungsabschnitt nach Anspruch 1,
**dadurch gekennzeichnet,**
**dass** die Strangführungsrolle (6) mittels der Strangführungsrolle (6) zugeführten Kühlwassers (11) innen gekühlt wird und dass der Schwingungssensor (15) über das Kühlwasser (11) an die Strangführungsrolle (6) und/oder an die Rollenlager (10) akustisch angekoppelt ist.

3. Strangführungsabschnitt nach Anspruch 1 oder 2,
**dadurch gekennzeichnet,**
**dass** die Strangführungsrolle (6) zum Zuführen und/oder Abführen des Kühlwassers (11) an mindestens einem Ende eine Drehdurchführung (12) aufweist, über welche Versorgungsleitungen (13) zum Zuführen und/oder Abführen des Kühlwassers (11) mit der Strangführungsrolle (6) verbunden sind, und dass der Schwingungssensor (15) an der Drehdurchführung (12) angeordnet ist.

4. Strangführungsabschnitt nach Anspruch 1, 2 oder 3,
**dadurch gekennzeichnet,**
**dass** die Schnittstelle (16) zur Auswertungseinrichtung (17) als leitungslose Schnittstelle ausgebildet ist, insbesondere als Funkschnittstelle, und dass die Sensoreinrichtung (14) eine eigene, interne Energiequelle (19) aufweist.

5. Strangführungsabschnitt nach einem der obigen Ansprüche,
**dadurch gekennzeichnet,**
- **dass** die Sensoreinrichtung (14) derart ausgebildet ist, dass sie aufgrund eines intern überwachten Zeitablaufs oder aufgrund eines über die Schnittstelle (16) erhaltenen Aktivierungsbefehls (A) von einem passiven Zustand (OFF) in einen aktivierten Zustand (ON) übergeht und aufgrund eines intern überwachten Zeitablaufs oder aufgrund eines über die Schnittstelle (16) erhaltenen Passivierungsbefehls (P) vom aktivierten Zustand (ON) in den passiven Zustand (OFF) übergeht, und
- **dass** ausschließlich im aktivierten Zustand (ON) der Sensoreinrichtung (14) der Schwingungssensor (15) die beim Drehen der Strangführungsrolle (6) auftretenden Schwingungen erfasst.

6. Strangführungsabschnitt nach einem der obigen Ansprüche,
**dadurch gekennzeichnet,**
**dass** der Schwingungssensor (15) die beim Drehen der Strangführungsrolle (6) auftretenden Schwingungen mit einer Abtastrate erfasst, die mindestens im zweistelligen kHz-Bereich liegt.

7. Ermittlungssystem für den Zustand (Z) mindestens eines Rollenlagers (10) einer Strangführungsrolle (6) eines einer Stranggießkokille (2) einer Stranggießanlage (1) nachgeordneten Strangführungsabschnitts (8) der Stranggießanlage (1),
**dadurch gekennzeichnet,**
- **dass** das Ermittlungssystem mindestens eine Sensoreinrichtung (14) aufweist, die ihrerseits mindestens einen an die Strangführungsrolle (6) oder deren Rollenlager (10) akustisch angekoppelten Schwingungssensor (15) aufweist, mittels dessen die beim Drehen der Strangführungsrolle (6) in den Rollenlagern (10) auftretenden Schwingungen erfasst werden,
- **dass** die Sensoreinrichtung (14) eine Schnittstelle (16) aufweist, über welche die Sensoreinrichtung (14) aus den erfassten Schwingungen abgeleitete Schwingungsdaten (SD) an eine Auswertungseinrichtung (17) des Ermittlungssystems übermittelt, und
- **dass** die Auswertungseinrichtung (17) unter Auswertung der an sie übermittelten Schwingungsdaten (SD) den Zustand (Z) des mindestens einen Rollenlagers (10) ermittelt.

8. Ermittlungssystem nach Anspruch 7,
**dadurch gekennzeichnet,**
**dass** die Auswertungseinrichtung (17) zumindest immer dann eine Meldung (M) an eine Bedienperson (24) und/oder ein Monitoringsystem (25) übermittelt, wenn sie im Rahmen der Auswertung einen kritischen Zustand des Rollenlagers (10) ermittelt.

9. Ermittlungssystem nach Anspruch 7 oder 8,
**dadurch gekennzeichnet,**
**dass** die Auswertungseinrichtung (17) die Schwingungsdaten (SD) und/oder den von ihr ermittelten Zustand (Z) des mindestens einen Rollenlagers (10) nach Art einer Historie speichert.

10. Ermittlungssystem nach Anspruch 7, 8 oder 9,
**dadurch gekennzeichnet,**
**dass** die Auswertungseinrichtung (17) bei der Ermittlung des Zustands (Z) des mindestens einen Rollenlagers (10) zusätzlich zu den Schwingungsdaten (SD) Betriebsdaten der Strangführungsrolle (6), des Strangführungsabschnitts (8) und/oder der Stranggießanlage (1) berücksichtigt.

11. Ermittlungssystem nach einem der Ansprüche 7 bis 10,
**dadurch gekennzeichnet,**
**dass** die Auswertungseinrichtung (17) eine zweidimensionale Frequenzzerlegung (FZ) der an sie übermittelten Schwingungsdaten (SD) ermittelt, dass je eine der beiden Dimensionen der Frequenzzerlegung (FZ) die Zeit (t) und die Frequenz (f) sind und dass die Auswertungseinrichtung (17) zur Ermittlung des Zustands (Z) des mindestens einen Rollenlagers (10) die Frequenzzerlegung (FZ) auswertet.

12. Ermittlungssystem nach Anspruch 11,
**dadurch gekennzeichnet,**
**dass** die Auswertungseinrichtung (17) für Zeitpunkte der übermittelten Schwingungsdaten (SD) jeweils die höchste Amplitude (MAX) ermittelt, dass die Auswertungseinrichtung (17) die jeweiligen höchsten Amplituden (MAX) mit mindestens einer Schranke (LIM1, LIM2) vergleicht und dass die Auswertungseinrichtung (17) den Zustand (Z) des mindestens einen Rollenlagers (10) in Abhängigkeit von den Vergleichen bestimmt.

13. Ermittlungssystem nach Anspruch 12,
**dadurch gekennzeichnet,**
**dass** die mindestens eine Schranke (LIM1, LIM2) zeitvariabel ist, insbesondere von der Auswertungseinrichtung (17) in Abhängigkeit vom Betriebszustand (BZ) der Stranggießanlage (1) bestimmt wird.

14. Ermittlungssystem nach Anspruch 11,
**dadurch gekennzeichnet,**
**dass** die Auswertungseinrichtung (17) für eine Vielzahl von Zeitpunkten und in einer Anzahl von vorbestimmten Frequenzbändern (FB) der Frequenzzerlegung (FZ) jeweils den Energieinhalt (E) der Frequenzzerlegung (FZ) ermittelt und dass die Auswertungseinrichtung (17) den Zustand (Z) des mindestens einen Rollenlagers (10) anhand der ermittelten Energieinhalte (E) bestimmt.

15. Ermittlungssystem nach Anspruch 14,
**dadurch gekennzeichnet,**
**dass** die Auswertungseinrichtung (17) - mit oder ohne vorherige Filterung der Energieinhalte (E) innerhalb des jeweiligen Frequenzbandes (FB) - für das jeweilige Frequenzband (FB) einen Mittelwert (E1) der Energieinhalte (E) und einen Maximalwert (E2) der Energieinhalte (E) ermittelt und den Zustand (Z) des mindestens einen Rollenlagers (10) anhand der ermittelten Mittelwerte (E1) und der ermittelten Maximalwerte (E2) der Frequenzbänder (FB) bestimmt.

16. Ermittlungssystem nach Anspruch 14,
**dadurch gekennzeichnet,**
**dass** die Auswertungseinrichtung (17) für mehrere Frequenzbänder (FB) jeweils - mit oder ohne vorherige Filterung der Energieinhalte (E) innerhalb des jeweiligen Frequenzbandes (FB) -
a) einen Mittelwert (E1) der Energieinhalte (E) und einen Maximalwert (E2) der Energieinhalte (E) ermittelt,
b) einen Anfangszeitpunkt (ta) ermittelt, zu dem der Energieinhalt (E) erstmals einen Zwischenwert (E3) zwischen dem Mittelwert (E1) und dem Maximalwert (E2) überschreitet,
c) ausgehend von dem ermittelten Anfangszeitpunkt (ta) einen Endzeitpunkt (te) ermittelt, zu dem der Energieinhalt (E) den Mittelwert (E1) erstmals wieder unterschreitet,
d) zwischen dem ermittelten Anfangszeitpunkt (ta) und dem ermittelten Endzeitpunkt (te) einen resultierenden Zeitpunkt (tr) ermittelt, zu dem der Energieinhalt (E) maximal ist,
e) ausgehend von dem zuletzt ermittelten Endzeitpunkt (te) die Schritte b) bis d) wiederholt, bis innerhalb des jeweiligen Frequenzbandes (FB) alle resultierenden Zeitpunkte (tr) ermittelt sind,
f) sodann anhand der ermittelten resultierenden Zeitpunkte (tr) eine jeweilige Periode (TR) ermittelt, mit welcher der Energieinhalt (E) innerhalb des jeweiligen Frequenzbandes (FB) variiert, und
g) anhand der für die Frequenzbänder (FB) ermittelten Perioden (TR) den Zustand (Z) des mindestens einen Rollenlagers (10) bestimmt.

17. Ermittlungssystem nach Anspruch 14,
**dadurch gekennzeichnet,**
**dass** die Auswertungseinrichtung (17) innerhalb der Frequenzbänder (FB) eine Frequenzanalyse der ermittelten Energieinhalte (E) mit einer Drehzahl der Strangführungsrolle (10) vergleicht und den Zustand (Z) des mindestens einen Rollenlagers (10) anhand des Vergleichs bestimmt.
